# EUROPEAN PATENT SPECIFICATION

(11) **EP 4 426 036 B1**
(45) Date of publication and mention of the grant of the patent: **25.11.2026**
(21) Application number: 22903254.5
(22) Date of filing: 29.11.2022
(51) Int. Cl.: H04W 72/04, H04W 4/06, H04W 72/0453, H04W 72/30, H04W 76/40

(54) **METHOD, APPARATUS AND SYSTEM FOR SENDING MULTICAST BROADCAST SERVICE**
VERFAHREN, VORRICHTUNG UND SYSTEM ZUM SENDEN EINES MULTICAST-BROADCAST-DIENSTES
PROCÉDÉ, APPAREIL ET SYSTÈME POUR ENVOYER UN SERVICE DE DIFFUSION/MULTIDIFFUSION

(30) Priority: 07.12.2021 CN 202111488565
(43) Date of publication of application: 04.09.2024
(73) Proprietor: Huawei Technologies Co., Ltd., Shenzhen, Guangdong 518129 (CN)
(72) Inventor: SUN, Huan, Shenzhen, Guangdong 518129 (CN); LUO, Zhihu, Shenzhen, Guangdong 518129 (CN); JIN, Zhe, Shenzhen, Guangdong 518129 (CN); YU, Zheng, Shenzhen, Guangdong 518129 (CN)
(74) Representative: Pfenning, Meinig & Partner mbB
(86) International application number: PCT/CN2022/134919
(87) International publication number: WO 2023/103832

(56) References cited:
- WO-A1-2018/027906
- CN-A- 111 133 809
- CN-A- 113 163 456
- US-A1- 2018 049 161
- US-A1- 2019 223 156
- US-A1- 2019 223 156

## Description

### TECHNICAL FIELD

Embodiments of this application relate to the communication field, and in particular, to multicast broadcast service sending methods, multicast broadcast service receiving methods, communication apparatuses, and a computer program product.

### BACKGROUND

Application scenarios of a 5th generation (5th generation, 5G) mobile communication technology mainly include an enhanced mobile broadband (enhanced mobile broadband, eMBB) scenario, an ultra-reliable low-latency communication (ultra-reliable low-latency communication, URLLC) scenario, and a massive machine type communications (massive machine type communications, mMTC) scenario.

In the eMBB scenario, a broadband terminal is introduced. In the mMTC scenario, a narrowband terminal is introduced. The narrowband terminal has a lower bandwidth capability than the broadband terminal.

With expansion of a scale of the narrowband terminal, the narrowband terminal further has a higher requirement for a multicast broadcast service (multicast broadcast service, MBS). For example, the narrowband terminal is a smartwatch in a wearable service. System firmware may be upgraded a plurality of times in a life cycle of the smartwatch. An upgrade package and the like required for the firmware upgrade may be sent by a server in a broadcast or multicast form. Alternatively, the smartwatch may need to receive a warning message of a natural disaster such as an earthquake or a tsunami, and the warning message of the natural disaster is usually sent in a broadcast or multicast form.

As the narrowband terminal has a higher requirement for the multicast broadcast service, there may be a scenario in which the narrowband terminal and the broadband terminal need to receive a same multicast broadcast service. In this scenario, how to configure and send the multicast broadcast service is a problem to be urgently resolved currently.

US 2019/223156 A1 discloses a mobile communication system. The system comprises a first radio terminal configured to transmit and receive a radio signal by using a limited frequency band limited to a bandwidth of a predetermined number of resource blocks, a second radio terminal configured to transmit and receive a radio signal by using a frequency band wider than the limited frequency band, and a base station configured to transmit configuration information of SC-MTCH being a traffic channel for SC-PTM transmission by SC-MCCH being a control channel for the SC-PTM transmission. The base station sets a first period to the first radio terminal, and sets a second period to the second radio terminal as an SC-MCCH change period in which the configuration information of the SC-MTCH can be changed. The first period is longer than the second period.

### SUMMARY

This application provides a multicast broadcast service sending method, a multicast broadcast service receiving method, communication apparatuses, and a computer program product, so that a multicast broadcast service can be properly configured and sent when a receiver of the multicast broadcast service includes a narrowband terminal and a broadband terminal, to reduce resource overheads. The invention is set out in the appended set of claims.

According to a first aspect, a multicast broadcast service sending method is provided. The method may be performed by an access network device, may be performed by a component of the access network device, for example, a processor, a chip, or a chip system of the access network device, or may be implemented by a logical module or software that can implement all or a part of functions of the access network device. The method includes:
receiving indication information from a core network device, where the indication information indicates that a receiver of a target multicast broadcast service includes a narrowband terminal and a broadband terminal; and sending a multicast control channel MCCH to the narrowband terminal and the broadband terminal, and sending the target multicast broadcast service to the narrowband terminal and the broadband terminal on a frequency domain resource corresponding to a multicast traffic channel MTCH of the target multicast broadcast service. The MCCH is used to carry configuration information of the MTCH of the target multicast broadcast service. A first frequency domain resource corresponding to the MCCH or a scheduling bandwidth occupied by the MCCH does not exceed a maximum bandwidth capability of the narrowband terminal.

According to this solution, there is a limitation that the first frequency domain resource corresponding to the MCCH or the scheduling bandwidth occupied by the MCCH does not exceed the maximum bandwidth capability of the narrowband terminal. Therefore, the narrowband terminal is capable of receiving the MCCH, so that the access network device can send the MCCH once, and both the narrowband terminal and the broadband terminal can receive the MCCH. In comparison with a case in which the access network device separately sends a SIBX, the MCCH, and the MTCH to the narrowband terminal and the broadband terminal, resource overheads are reduced.

With reference to the first aspect, in a possible implementation of the first aspect, the first frequency domain resource corresponding to the MCCH is a maximum bandwidth that can be occupied by the MCCH.

With reference to the first aspect, in a possible implementation of the first aspect, the first frequency domain resource is a common frequency resource CFR.

With reference to the first aspect, in a possible implementation of the first aspect, the indication information includes at least one indicator. There is a correspondence between the at least one indicator and an identifier of at least one multicast broadcast service, and the at least one multicast broadcast service includes the target multicast broadcast service.

Based on this possible implementation, one indicator may be designed to correspond to an identifier of one multicast broadcast service, in other words, an indicator with a service as a granularity is used, so that a type of a receiver corresponding to each service can be more flexibly indicated, thereby implementing an indication that different services correspond to types of different receivers. Alternatively, one indicator may be designed to correspond to identifiers of a plurality of multicast broadcast services, in other words, one indicator indicates types of receivers of the plurality of multicast broadcast services, so that signaling overheads of the indication information can be reduced. In addition, because the access network device sends the MCCH once to the narrowband terminal and the broadband terminal, one RNTI may be used to scramble the MCCH, in other words, the narrowband terminal and the broadband terminal may share one RNTI, to reduce RNTI overheads.

With reference to the first aspect, in a possible implementation of the first aspect, a total amount of configuration information that is of the MTCH and that is carried by the MCCH does not exceed a threshold, and the threshold is an upper limit of a quantity of MTCH configurations for the broadband terminal or the narrowband terminal that are carried by the MCCH.

Because a TBS of the MCCH is limited, an amount of configuration information that is of the MTCH and that is carried by the MCCH cannot be increased infinitely. Based on this possible implementation, the amount of configuration information of the MTCH is limited, thereby meeting a TBS limitation of the MCCH.

With reference to the first aspect, in a possible implementation of the first aspect, the sending the target multicast broadcast service to the narrowband terminal and the broadband terminal on a frequency domain resource corresponding to the MTCH includes: sending M target multicast broadcast services to the narrowband terminal and the broadband terminal on frequency domain resources corresponding to N MTCHs, where N and M are positive integers.

Based on this possible implementation, the access network device may separately send the multicast broadcast service to the narrowband terminal and the broadband terminal, to improve flexibility of sending the multicast broadcast service.

With reference to the first aspect, in a possible implementation of the first aspect, before sending the MCCH to the narrowband terminal and the broadband terminal, the method further includes: determining the MCCH.

According to a second aspect, a multicast broadcast service sending method is provided. The method may be performed by an access network device, may be performed by a component of the access network device, for example, a processor, a chip, or a chip system of the access network device, or may be implemented by a logical module or software that can implement all or a part of functions of the access network device. The method includes: receiving indication information from a core network device, where the indication information indicates that a receiver of a target multicast broadcast service includes a narrowband terminal and a broadband terminal;
sending a first multicast control channel MCCH to the narrowband terminal, and sending a second MCCH to the broadband terminal; and sending the target multicast broadcast service to the narrowband terminal and the broadband terminal on a frequency domain resource corresponding to a multicast traffic channel MTCH of the target multicast broadcast service. The first MCCH is used to carry first configuration information of the MTCH of the target multicast broadcast service, and the second MCCH is used to carry second configuration information of the MTCH of the target multicast broadcast service. A frequency domain resource that corresponds to the MTCH and that is configured by using the first configuration information is the same as a frequency domain resource that corresponds to the MTCH and that is configured by using the second configuration information.

According to this solution, a frequency domain resource that corresponds to the MTCH and that is configured by using the configuration information that is of the MTCH and that is sent to the narrowband terminal is the same as a frequency domain resource that corresponds to the MTCH and that is configured by using the configuration information that is of the MTCH and that is sent to the broadband terminal, so that both the narrowband terminal and the broadband terminal can receive a multicast broadcast service sent by the access network device on the frequency domain resource. Therefore, a multicast broadcast service whose receiver includes the narrowband terminal and the broadband terminal may be sent once by the access network device. In comparison with a case in which the access network device separately sends a SIBX, the MCCH, and the MTCH to the narrowband terminal and the broadband terminal, resource overheads can be reduced.

With reference to the second aspect, in a possible implementation of the second aspect, the indication information includes at least one indicator, there is a correspondence between the at least one indicator and an identifier of at least one multicast broadcast service, and the at least one multicast broadcast service includes the target multicast broadcast service.

With reference to the second aspect, in a possible implementation of the second aspect, the first configuration information includes a first group radio network temporary identifier G-RNTI, the second configuration information includes a second G-RNTI, the first G-RNTI is the same as the second G-RNTI, and the first G-RNTI and the second G-RNTI are used to scramble the target multicast broadcast service.

Based on this possible implementation, when a same multicast broadcast service is sent to the narrowband terminal and the broadband terminal on a same frequency domain resource, the narrowband terminal and the broadband terminal share one G-RNTI, so that available G-RNTI resources can be saved.

With reference to the second aspect, in a possible implementation of the second aspect, the first configuration information includes a first identifier of the target multicast broadcast service, the second configuration information includes a second identifier of the target multicast broadcast service, and the first identifier is the same as the second identifier.

With reference to the second aspect, in a possible implementation of the second aspect, a candidate frequency domain position of a first physical downlink control channel PDCCH and a candidate frequency domain position of a second PDCCH partially or completely overlap. The first PDCCH is used to carry first downlink control information DCI, where the first DCI is used to schedule the frequency domain resource corresponding to the MTCH for the narrowband terminal. The second PDCCH is used to carry second DCI, where the second DCI is used to schedule the frequency domain resource corresponding to the MTCH for the broadband terminal.

Based on this possible implementation, when the candidate frequency domain position of the second PDCCH and the candidate frequency domain position of the first PDCCH partially or completely overlap, the first DCI and the second DCI may occupy an overlapping candidate frequency domain position. To be specific, a frequency domain position occupied by DCI for scheduling the frequency domain resource corresponding to the MTCH of the target multicast broadcast service for the narrowband terminal may be the same as a frequency domain position occupied by DCI for scheduling the frequency domain resource corresponding to the MTCH of the target multicast broadcast service for the broadband terminal, so that frequency domain resource overheads can be reduced.

With reference to the second aspect, in a possible implementation of the second aspect, a candidate time domain position of the first PDCCH and a candidate time domain position of the second PDCCH partially or completely overlap.

Based on this possible implementation, when the candidate time domain position of the second PDCCH and the candidate time domain position of the first PDCCH partially or completely overlap, the first DCI and the second DCI may occupy an overlapping candidate time domain position. To be specific, a time domain position occupied by the DCI for scheduling the frequency domain resource corresponding to the MTCH of the target multicast broadcast service for the narrowband terminal may be the same as a time domain position occupied by the DCI for scheduling the frequency domain resource corresponding to the MTCH of the target multicast broadcast service for the broadband terminal, so that time domain resource overheads can be reduced.

With reference to the second aspect, in a possible implementation of the second aspect, the first DCI is the same as the second DCI. The method further includes: sending the first DCI to the narrowband terminal and the broadband terminal on a first time-frequency resource. A frequency domain position of the first time-frequency resource is located in an overlapping part between the candidate frequency domain position of the first PDCCH and the candidate frequency domain position of the second PDCCH. A time domain position of the first time-frequency resource is located in an overlapping part between the candidate time domain position of the first PDCCH and the candidate time domain position of the second PDCCH.

Based on this possible implementation, the access network device may send, to the narrowband terminal and the broadband terminal on a same time-frequency resource, DCI for scheduling the frequency domain resource corresponding to the MTCH. To be specific, the DCI for scheduling the frequency domain resource corresponding to the MTCH for the narrowband terminal and the DCI for scheduling the frequency domain resource corresponding to the MTCH for the broadband terminal are same DCI, and it is unnecessary to respectively send different DCI to the narrowband terminal and the broadband terminal on different time-frequency resources, so that scheduling resource overheads can be reduced.

According to a third aspect, a multicast broadcast service receiving method is provided. The method may be performed by a narrowband terminal, may be performed by a component of the narrowband terminal, for example, a processor, a chip, or a chip system of the narrowband terminal, or may be implemented by a logical module or software that can implement all or a part of functions of the narrowband terminal. The method includes:
receiving a first multicast control channel MCCH from an access network device; and receiving a target multicast broadcast service from the access network device on a frequency domain resource corresponding to a multicast traffic channel MTCH of the target multicast broadcast service. The first MCCH is used to carry first configuration information of the MTCH of the target multicast broadcast service. A frequency domain resource that corresponds to the MTCH and that is configured by using the first configuration information is the same as a frequency domain resource that corresponds to the MTCH and that is configured by using second configuration information. The second configuration information is configuration information that is of the MTCH and that is for a broadband terminal.

According to a fourth aspect, a multicast broadcast service receiving method is provided. The method may be performed by a broadband terminal, may be performed by a component of the broadband terminal, for example, a processor, a chip, or a chip system of the broadband terminal, or may be implemented by a logical module or software that can implement all or a part of functions of the broadband terminal. The method includes:
receiving a second multicast control channel MCCH from an access network device; and receiving a target multicast broadcast service from the access network device on a frequency domain resource corresponding to a multicast traffic channel MTCH of the target multicast broadcast service. The second MCCH is used to carry second configuration information of the MTCH of the target multicast broadcast service. A frequency domain resource that corresponds to the MTCH and that is configured by using the second configuration information is the same as a frequency domain resource that corresponds to the MTCH and that is configured by using first configuration information. The first configuration information is configuration information that is of the MTCH and that is for a narrowband terminal.

With reference to the third aspect or the fourth aspect, in a possible implementation of the third aspect or the fourth aspect, the first configuration information includes a first group radio network temporary identifier G-RNTI, the second configuration information includes a second G-RNTI, the first G-RNTI is the same as the second G-RNTI, and the first G-RNTI and the second G-RNTI are used to scramble the target multicast broadcast service.

With reference to the third aspect or the fourth aspect, in a possible implementation of the third aspect or the fourth aspect, the first configuration information includes a first identifier of the target multicast broadcast service, the second configuration information includes a second identifier of the target multicast broadcast service, and the first identifier is the same as the second identifier.

With reference to the third aspect or the fourth aspect, in a possible implementation of the third aspect or the fourth aspect, a candidate frequency domain position of a first physical downlink control channel PDCCH and a candidate frequency domain position of a second PDCCH partially or completely overlap. The first PDCCH is used to carry first downlink control information DCI, where the first DCI is used to schedule the frequency domain resource corresponding to the MTCH for the narrowband terminal. The second PDCCH is used to carry second DCI, where the second DCI is used to schedule the frequency domain resource corresponding to the MTCH for the broadband terminal.

With reference to the third aspect or the fourth aspect, in a possible implementation of the third aspect or the fourth aspect, a candidate time domain position of the first PDCCH and a candidate time domain position of the second PDCCH partially or completely overlap.

With reference to the third aspect or the fourth aspect, in a possible implementation of the third aspect or the fourth aspect, the first DCI is the same as the second DCI. The method further includes: receiving first DCI from the access network device on a first time-frequency resource. A frequency domain position of the first time-frequency resource is located in an overlapping part between the candidate frequency domain position of the first PDCCH and the candidate frequency domain position of the second PDCCH. A time domain position of the first time-frequency resource is located in an overlapping part between the candidate time domain position of the first PDCCH and the candidate time domain position of the second PDCCH.

For technical effects brought by the third aspect, the fourth aspect, or any one of the possible implementations of either the third aspect or the fourth aspect, refer to the technical effects brought by the third aspect or the corresponding implementations. Details are not described herein again.

According to a fifth aspect, a communication apparatus is provided to implement the foregoing methods. The communication apparatus may be the access network device in the first aspect or the second aspect, or an apparatus, for example, a chip, included in the access network device; may be the terminal in the third aspect, or the fourth aspect, or an apparatus, for example, a chip, included in the terminal. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In a possible design, the communication apparatus may include a receiving module and a sending module, respectively configured to implement a receiving function and a sending function in any one of the foregoing aspects and the possible implementations of the foregoing aspects. The receiving module may include a receiving circuit, a receiver, a receiver device, or an input interface. The sending module may include a sending circuit, a transmitter, a transmitter device, or an output interface.

In a possible design, the communication apparatus may further include a processing module. The processing module may be configured to implement a processing function in any one of the foregoing aspects and the possible implementations of the foregoing aspects.

According to a sixth aspect, a computer program product including instructions is provided. When the computer program product runs on a communication apparatus, the method in any one of the foregoing aspects is implemented.

It may be understood that when the communication apparatus provided in the fifth aspect is a chip, the foregoing sending action/function may be understood as outputting information, and the foregoing receiving action/function may be understood as inputting information.

For technical effects brought by any one of the design manners in the fifth aspect to the sixth aspect, refer to the technical effects brought by different design manners in the first aspect to the fourth aspect. Details are not described herein again. device in the first aspect or the third aspect, or an apparatus, for example, a chip, included in the access network device; may be the terminal in the second aspect, the fourth aspect, or the fifth aspect, or an apparatus, for example, a chip, included in the terminal; or may be the core network device in the sixth aspect, or an apparatus, for example, a chip, included in the core network device.

According to a ninth aspect, a communication apparatus is provided, and includes a processor and a communication interface. The communication interface is configured to communicate with a module outside the communication apparatus. The processor is configured to execute a computer program or instructions, to enable the communication apparatus to perform the method in any one of the foregoing aspects. The communication apparatus may be the access network device in the first aspect or the third aspect, or an apparatus, for example, a chip, included in the access network device; may be the terminal in the second aspect, the fourth aspect, or the fifth aspect, or an apparatus, for example, a chip, included in the terminal; or may be the core network device in the sixth aspect, or an apparatus, for example, a chip, included in the core network device.

According to a tenth aspect, a communication apparatus is provided, and includes a logic circuit and an interface circuit. The interface circuit is configured to: obtain to-be-processed information; and/or output processed information. The logic circuit is configured to perform the method in any one of the foregoing aspects, to process the to-be-processed information and/or generate the processed information. The communication apparatus may be the access network device in the first aspect or the third aspect, or an apparatus, for example, a chip, included in the access network device; may be the terminal in the second aspect, the fourth aspect, or the fifth aspect, or an apparatus, for example, a chip, included in the terminal; or may be the core network device in the sixth aspect, or an apparatus, for example, a chip, included in the core network device.

According to an eleventh aspect, a communication apparatus is provided, and includes an interface circuit and a processor. The interface circuit is a code/data read/write interface circuit. The interface circuit is configured to: receive computer-executable instructions (where the computer-executable instructions are stored in a memory, and may be read from the memory directly or via another component); and transmit computer-executable instructions to the processor. The processor is configured to execute the computer-executable instructions, to enable the communication apparatus to perform the method in any one of the foregoing aspects. The communication apparatus may be the access network device in the first aspect or the third aspect, or an apparatus, for example, a chip, included in the access network device; may be the terminal in the second aspect, the fourth aspect, or the fifth aspect, or an apparatus, for example, a chip, included in the terminal; or may be the core network device in the sixth aspect, or an apparatus, for example, a chip, included in the core network device.

According to a twelfth aspect, a communication apparatus is provided, and includes at least one processor. The processor is configured to execute a computer program or instructions, to enable the communication apparatus to perform the method in any one of the foregoing aspects. The communication apparatus may be the access network device in the first aspect or the third aspect, or an apparatus, for example, a chip, included in the access network device; may be the terminal in the second aspect, the fourth aspect, or the fifth aspect, or an apparatus, for example, a chip, included in the terminal; or may be the core network device in the sixth aspect, or an apparatus, for example, a chip, included in the core network device.

In a possible design, the communication apparatus includes a memory. The memory is configured to store necessary program instructions and data. The memory may be coupled to the processor, or may be independent of the processor.

In a possible design, the communication apparatus may be a chip or a chip system. When the apparatus is the chip system, the apparatus may include a chip, or may include a chip and another discrete component.

According to a thirteenth aspect, a computer-readable storage medium is provided. The computer-readable storage medium stores instructions. When the instructions are run on a communication apparatus, the method in any one of the foregoing aspects is implemented.

According to a fourteenth aspect, a computer program product including instructions is provided. When the computer program product runs on a communication apparatus, the method in any one of the foregoing aspects is implemented.

It may be understood that when the communication apparatus provided in any one of the seventh aspect to the twelfth aspect is a chip, the foregoing sending action/function may be understood as outputting information, and the foregoing receiving action/function may be understood as inputting information.

For technical effects brought by any one of the design manners in the seventh aspect to the fourteenth aspect, refer to the technical effects brought by different design manners in the first aspect to the sixth aspect. Details are not described herein again.

According to a fifteenth aspect, a communication system is provided. The communication system includes the access network device, the narrowband terminal, and the broadband terminal in the foregoing aspects.

With reference to the fifteenth aspect, in a possible design, the communication system may further include the core network device in the foregoing aspects.

### BRIEF DESCRIPTION OF DRAWINGS

FIG. 1 is a diagram of a broadcast mechanism according to this application;
FIG. 2 is a diagram of a DRX mechanism of an MCCH according to this application;
FIG. 3 is a diagram of a structure of a communication system according to this application;
FIG. 4 is a diagram of a structure of a communication apparatus according to this application;
FIG. 5 is a schematic flowchart of a multicast broadcast service sending method according to this application;
FIG. 6 is a diagram of types of configuration information of an MTCH carried by an MCCH according to this application;
FIG. 7 is a diagram of a relationship between a CFR of an MCCH and a CFR of an MTCH according to this application;
FIG. 8 is a schematic flowchart of another multicast broadcast service sending method according to this application;
FIG. 9 is a diagram of configuration information carried by a first MCCH and configuration information carried by a second MCCH according to this application;
FIG. 10 is a diagram of candidate time domain positions of a first PDCCH and candidate time domain positions of a second PDCCH according to this application;
FIG. 11 is another diagram of candidate time domain positions of a first PDCCH and candidate time domain positions of a second PDCCH according to this application;
FIG. 12 is a diagram of a structure of an access network device according to this application;
FIG. 13 is a diagram of a structure of a narrowband terminal according to this application;
FIG. 14 is a diagram of a structure of a broadband terminal according to this application; and
FIG. 15 is a diagram of a structure of a core network device according to this application.

### DESCRIPTION OF EMBODIMENTS

In descriptions of this application, unless otherwise specified, "/" represents that associated objects are in an "or" relationship. For example, A/B may represent A or B. "And/or" in this application merely describes an association relationship between associated objects and represents that three relationships may exist. For example, A and/or B may represent three cases: Only A exists, both A and B exist, or only B exists, where A and B may be singular or plural.

In addition, in the descriptions of this application, unless otherwise specified, "a plurality of" means two or more than two. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the term such as "first" and "second" do not limit a quantity or an execution sequence, and the terms such as "first" and "second" do not indicate a definite difference.

In addition, in embodiments of this application, the terms such as "example" or "for example" is used to represent giving an example, an illustration, or a description. Any embodiment or design scheme described as the "example" or "for example" in embodiments of this application should not be explained as being more preferred or having more advantages than another embodiment or design scheme. Exactly, use of the term such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of processes do not mean execution sequences in embodiments of this application. The execution sequences of the processes should be determined based on functions and internal logic of the processes, and should not constitute any limitation on implementation processes of embodiments of this application.

It may be understood that in this application, both "when..." and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application do not constitute a limitation on the protection scope of this application.

To facilitate understanding of the technical solutions in embodiments of this application, the following first briefly describes technologies related to this application.

### 1. Narrowband terminal and broadband terminal:

A bandwidth capability of the narrowband terminal is lower than a bandwidth capability of the broadband terminal. The narrowband terminal may also be referred to as a reduced capability (reduced capability, RedCap) terminal. It may be understood that a "bandwidth" in embodiments of this application is a frequency domain bandwidth.

### 2. Common frequency resource (common frequency resource, CFR):

The CFR is a segment of consecutive common frequency resources configured or defined by an access network device on a group-common (group-common) physical downlink control channel (physical downlink control channel, PDCCH)/physical downlink shared channel (physical downlink shared channel, PDSCH) for a multicast broadcast service.

### 3. Multicast broadcast service (multicast broadcast service, MBS):

The MBS is a point-to-multipoint service. MBS services include a broadcast service and a multicast service. In the MBS service, data is sent from a single source entity to a plurality of receivers, to all users in a broadcast service area, or to a user in a multicast group.

For ease of description, the MBS is referred to as a multicast broadcast service in embodiments of this application, and the MBS and the multicast broadcast service are interchangeable. This is not specifically limited in this application.

### 4. Broadcast mechanism in NR:

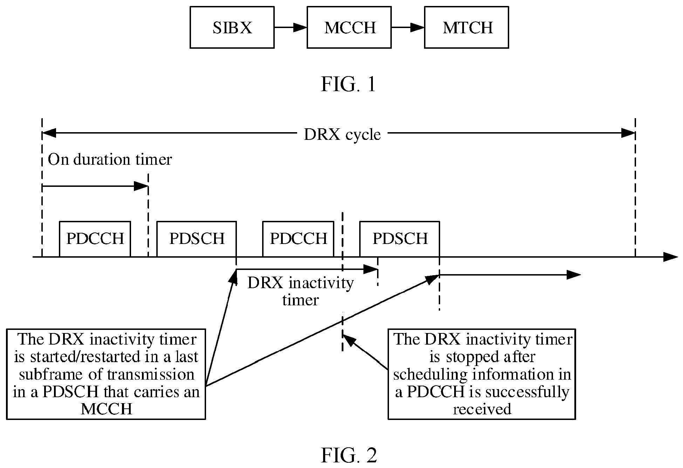

As shown in FIG. 1, in the broadcast mechanism in the NR, configuration information of a multicast control channel (multicast control channel, MCCH) is carried in a system information block typeX (system information block typeX, SIBX), and configuration information of one or more multicast traffic channels (multicast traffic channels, MTCHs) is carried in the MCCH. Generally, there is a correspondence between a specific multicast broadcast service and an MTCH. For example, the multicast broadcast service and the MTCH are in one-to-one correspondence.

The MCCH is scrambled by a radio network temporary identifier (radio network temporary identifier, RNTI). The MCCH carries a support status of an adjacent cell for a multicast broadcast service of a cell, and configuration information of the MTCH. The configuration information that is of the MTCH and that is carried in the MCCH is mapped to a PDSCH for transmission.

The MCCH uses a concept of a modification periodicity. In each modification periodicity, content carried by the MCCH remains unchanged and is sent a plurality of times based on a repetition periodicity, so that a terminal can obtain the MCCH as soon as possible when accessing the cell at any time. Scheduling and reception of the MCCH use a discontinuous reception (discontinuous reception, DRX) mechanism, and are controlled by using a DRX cycle, an on duration timer (onDurationTimer), and a DRX inactivity timer (DRX-InactivityTimer).

FIG. 2 is a diagram of a DRX mechanism of an MCCH. During running of an on duration timer and a DRX inactivity timer, a terminal monitors a PDCCH by using an MCCH radio network temporary identifier (MCCH radio network temporary identifier, MCCH-RNTI) to obtain scheduling information of the MCCH.
(1) The on duration timer is periodically started based on a configured DRX cycle.
(2) The DRX inactivity timer is started or restarted in a last subframe of transmission in a PDSCH that carries the MCCH, and is stopped after the terminal receives the scheduling information that is of the MCCH and that is carried in the PDCCH.

Configuration information of an MTCH includes:
(1) a mapping relationship (or correspondence) between a temporary mobile group identity (temporary mobile group identity, TMGI) or a session identifier (session ID) corresponding to a multicast broadcast service and a group radio network temporary identifier (group radio network temporary identifier, G-RNTI);
(2) a DRX parameter used by the MTCH (such as a DRX cycle, onDurationTimer, or DRX-InactivityTimer); and
(3) a configuration of a carrier on which the MTCH is located and a configuration of search space of the PDCCH. In other words, information carried in the MTCH is mapped to a PDSCH for transmission. The PDCCH is used to carry scheduling information of the MTCH. The information carried in the MTCH is the multicast broadcast service.

The MTCH is scrambled by using the G-RNTI. Transmission may be performed on different MTCHs on different carriers. Scheduling and reception of the MTCH may use a same DRX mechanism and a same DRX parameter as the DRX mechanism and a DRX parameter of the scheduling and reception of the MCCH. To be specific, the scheduling and reception of the MTCH are controlled by using parameters such as the DRX cycle, onDurationTimer, and DRX-InactivityTimer. During running of onDurationTimer and DRX-InactivityTimer, the terminal monitors the PDCCH by using a corresponding G-RNTI to obtain the scheduling information of the MTCH.

With the expansion of a requirement of the narrowband terminal for the multicast broadcast service, there may be a scenario in which the narrowband terminal and the broadband terminal need to receive a same multicast broadcast service. In view of this, this application provides a multicast broadcast service sending method. In the scenario in which the narrowband terminal and the broadband terminal need to receive the same multicast broadcast service, the multicast broadcast service can be properly configured and sent, thereby reducing resource overheads as much as possible.

The following describes the solutions of this application with reference to the accompanying drawings. The technical solutions in embodiments of this application may be applied to various communication systems. The communication system may be a 3rd generation partnership project (3rd generation partnership project, 3GPP) communication system, for example, an NR system, a long term evolution (long term evolution, LTE) system, a vehicle-to-everything (vehicle-to-everything, V2X) system, an LTE and 5G hybrid networking system, a device-to-device (device-to-device, D2D) communication system, a machine-to-machine (machine-to-machine, M2M) communication system, or an internet of things (Internet of Things, IoT) communication system, or another next generation communication system. Alternatively, the communication system may be a non-3GPP communication system. This is not limited.

The technical solutions in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine type communications (massive machine type communications, mMTC), D2D, V2X, M2M, or IoT.

The foregoing communication systems and the foregoing communication scenarios applicable to this application are merely examples for description. The communication systems and the communication scenarios applicable to this application are not limited thereto. This is uniformly described herein. Details are not described below again.

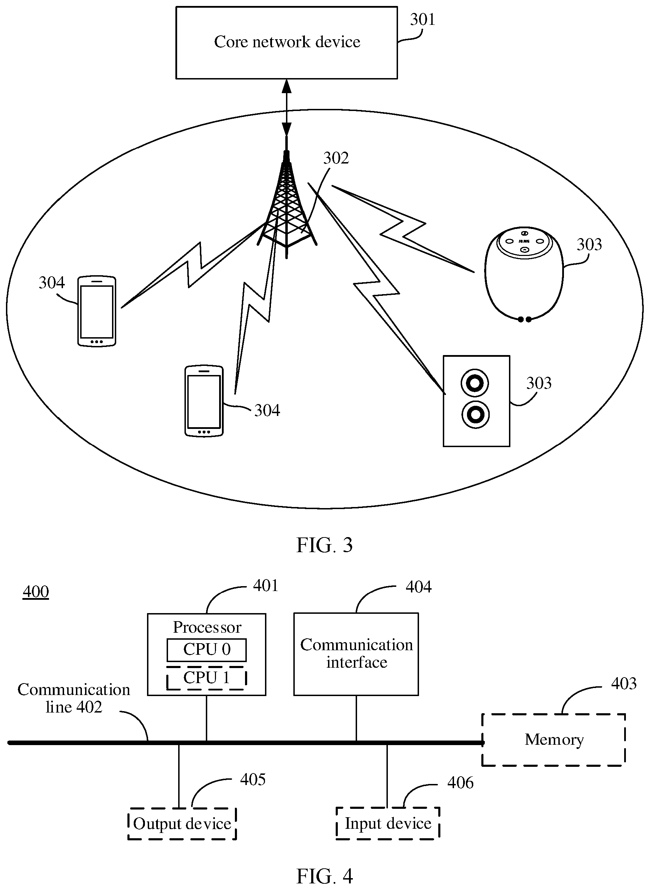

FIG. 3 shows a communication system according to an embodiment of this application. The communication system includes a core network device 301, an access network device 302, a narrowband terminal 303, and a broadband terminal 304.

It may be understood that a quantity of narrowband terminals and a quantity of broadband terminals are not specifically limited in this application, and the system includes at least two narrowband terminals and at least two broadband terminals.

Optionally, the core network device 301 may be a device responsible for mobility management in a mobile network, for example, an access and mobility management function (access and mobility management function, AMF) network element in NR. Alternatively, the core network device 301 may be a device responsible for session management in a mobile network, for example, a session management function (session management function, SMF) network element in NR.

Optionally, the access network device 302 is a device for connecting a terminal to a wireless network. The access network device 302 may be a node in a radio access network. The access network device 302 may be referred to as a base station or a radio access network (radio access network, RAN) node (or device). For example, the access network device may be a next generation NodeB (next generation NodeB, gNB), a transmission reception point (transmission reception point, TRP), a home base station (for example, a home evolved NodeB or a home NodeB, HNB), a baseband unit (baseband unit, BBU), a baseband pool BBU pool, or a Wi-Fi access point (access point, AP) in a 5G system. Alternatively, the access network device may be a central unit (central unit, CU) and/or a distributed unit (distributed unit, DU) in a cloud access network (cloud radio access network, Cloud RAN) system. Alternatively, the access network device may be a device that implements a base station function in a non-terrestrial network (non-terrestrial network, NTN). Alternatively, the access network device may be a device that implements a base station function in IoT, or a device that implements a base station function in V2X, D2D, or M2M. This is not limited in this embodiment of this application.

Optionally, the narrowband terminal 303 may be a device that has a small bandwidth capability and that is configured to implement a wireless communication function. For example, the narrowband terminal may be a wearable device, a wireless terminal in industrial control (industrial control), a wireless terminal in self-driving (self-driving), a wireless terminal in a smart grid (smart grid), a wireless terminal in transportation safety (transportation safety), a wireless terminal in a smart city (smart city), or a wireless terminal in a smart home (smart home). Alternatively, the narrowband terminal may be a terminal in the IoT, a terminal in D2D communication, a terminal in M2M communication, or the like.

Optionally, the broadband terminal 304 may be a device that has a large bandwidth capability and that is configured to implement a wireless communication function. For example, the broadband terminal may be a cellular phone, a cordless phone, a session initiation protocol (session initiation protocol, SIP) phone, a wireless local loop (wireless local loop, WLL) station, personal digital assistant (personal digital assistant, PDA), a handheld device (for example, a smartphone) having a wireless communication function, a computing device, another processing device connected to a wireless modem, a vehicle-mounted device, a virtual reality (virtual reality, VR) terminal device, an augmented reality (augmented reality, AR) terminal device, or a wireless terminal in telemedicine (remote medical).

Functions related to the terminal, the access network device, and the core network device in this application may be implemented by one device, may be jointly implemented by a plurality of devices, may be implemented by one or more functional modules in one device, or may be implemented by one or more chips, a system-on-chip (system-on-chip, SoC) or a chip system. The chip system may include a chip, or may include a chip and another discrete component. This is not specifically limited in embodiments of this application.

It may be understood that the foregoing functions may be network elements in a hardware device, may be software functions running on dedicated hardware, combinations of hardware and software, or virtualized functions instantiated on a platform (for example, a cloud platform).

For example, the functions related to the terminal, the access network device, and the core network device in this application may be implemented by a communication device 400 in FIG. 4. FIG. 4 is a diagram of a structure of a communication device 400 according to an embodiment of this application. The communication device 400 includes one or more processors 401 and at least one communication interface (where FIG. 4 is merely an example, and a communication interface 404 and one processor 401 are included is used for description), and optionally may further include a communication line 402 and a memory 403.

The processor 401 may be an integrated circuit that is configured to control program execution of solutions of this application, for example, a general-purpose central processing unit (central processing unit, CPU), a microprocessor, an application-specific integrated circuit (application-specific integrated circuit, ASIC), a digital signal processor (DSP), a microcontroller (microcontroller unit, MCU), or an artificial intelligence processor.

During specific implementation, in an embodiment, the processor 401 may include one or more CPUs such as a CPU 0 and a CPU 1 in FIG. 4.

The communication interface 404 is configured to communicate with another device or a communication network. The communication interface 404 may be an apparatus such as a transceiver or a transceiver machine. Alternatively, the communication interface 404 may be a transceiver circuit located in the processor 401, configured to implement signal input and signal output of the processor.

The communication line 402 is configured to communicate between different components included in a communication apparatus 400.

The memory 403 may be an apparatus having a storage function. For example, the memory 403 may be a read-only memory (read-only memory, ROM), another type of static storage device that can store static information and instructions, a random access memory (random access memory, RAM), another type of dynamic storage device that can store information and instructions, an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory 403 is not limited thereto. The memory may exist independently, and is connected to the processor through the communication line 402. The memory may alternatively be integrated with the processor.

Optionally, the memory 403 is configured to store computer-executable instructions for executing the solutions in this application, and the processor 401 controls the execution. The processor 401 is configured to execute the computer-executable instructions stored in the memory 403, to implement the method provided in embodiments of this application.

Optionally, the computer-executable instructions in this embodiment of this application may also be referred to as application program code. This is not specifically limited in this embodiment of this application.

During specific implementation, in an embodiment, the communication device 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

It should be noted that the composition structure shown in FIG. 4 does not constitute a limitation on the communication apparatus. In addition to the components shown in FIG. 4, the communication apparatus may include more or fewer components than those shown in the figure, some components may be combined, or different component arrangements may be used.

With reference to the communication system shown in FIG. 3, the following describes in detail multicast broadcast service sending methods provided in embodiments of this application.

It should be noted that in the following embodiments of this application, a name of a message between devices, a name of each parameter, a name of each piece of information, or the like is merely an example, and may be another name in another embodiment. This is not specifically limited in the methods provided in this application.

It may be understood that in embodiments of this application, each device may perform a part of or all of steps in embodiments of this application, and these steps or operations are merely examples. In embodiments of this application, another operation or various operation variants may further be performed. In addition, the steps may be performed in different sequences presented in embodiments of this application, and not all operations in embodiments of this application may be performed.

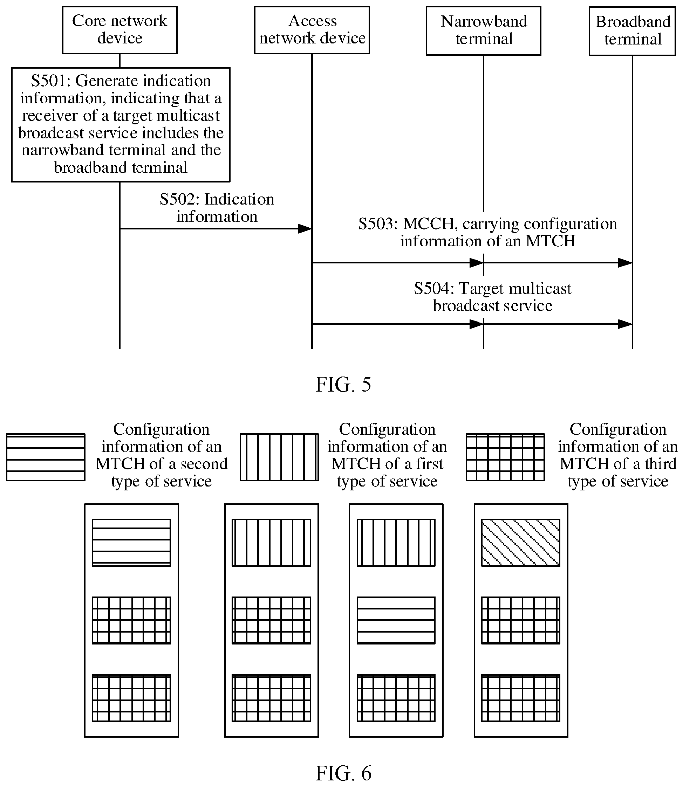

FIG. 5 shows a multicast broadcast service sending method according to this application. The method may be applied to the communication system shown in FIG. 3, and includes the following steps.

S501: A core network device generates indication information.

The indication information indicates whether a receiver of a multicast broadcast service includes a narrowband terminal and a broadband terminal. In other words, the indication information indicates a type of the receiver of the multicast broadcast service. The type of the receiver may include the narrowband terminal, the broadband terminal, and the narrowband terminal and the broadband terminal. This application is described by using an example in which the indication information indicates that a receiver of a target multicast broadcast service includes a narrowband terminal and a broadband terminal.

S502: The core network device sends the indication information to an access network device. Correspondingly, the access network device receives the indication information from the core network device.

Optionally, the core network device may send the indication information to the access network device in signaling including the multicast broadcast service. For example, the core network device may send the multicast broadcast service to the access network device in the following two service sending modes. Mode 1: As shown in Table 1, one piece of signaling includes a single multicast broadcast service. Mode 2: As shown in Table 2, one piece of signaling includes a plurality of multicast broadcast services.

**Table 1**

| |
|---|
| Identifier (for example, a TMGI) of a multicast broadcast service |
| Other information (other information) |

**Table 2**

| |
|---|
| Identifier list (for example, a TMGI list) of a multicast broadcast service |
| Other information (other information) |

The identifier of the multicast broadcast service identifies the multicast broadcast service. One multicast broadcast service corresponds to one identifier, and different multicast broadcast services have different identifiers.

Optionally, the indication information may include at least one indicator. There is a correspondence between the at least one indicator and an identifier of at least one multicast broadcast service. The at least one multicast broadcast service includes the target multicast broadcast service.

Optionally, different values of the indicator represent different cases of a receiver of a multicast broadcast service corresponding to the indicator. For example, when a value of the indicator is a first value, it represents that a receiver of a multicast broadcast service corresponding to the indicator includes the narrowband terminal and the broadband terminal. When a value of the indicator is a second value, it represents that a receiver of a multicast broadcast service corresponding to the indicator is the narrowband terminal. When a value of the indicator is a third value, it represents that a receiver of a multicast broadcast service corresponding to the indicator is the broadband terminal.

Alternatively, when a value of the indicator is a first value, it represents that a receiver of a multicast broadcast service corresponding to the indicator includes the narrowband terminal and the broadband terminal. When a value of the indicator is a second value, it represents that a receiver of a multicast broadcast service corresponding to the indicator is the narrowband terminal or the broadband terminal. This is not specifically limited in this application.

In a possible implementation, the indication information includes one indicator. The indicator corresponds to one specific target multicast broadcast service, and indicates that a receiver of the target multicast broadcast service includes the narrowband terminal and the broadband terminal. For example, as shown in Table 3, the indicator may be carried in signaling that includes the specific target multicast broadcast service and that is sent by the core network device to the access network device.

**Table 3**

| |
|---|
| Identifier (for example, a TMGI) of a target multicast broadcast service |
| Other information (other information) |
| Indicator (indicator) |

In another possible implementation, the indication information includes a plurality of indicators. There are correspondences between the plurality of indicators and identifiers of a plurality of multicast broadcast services. The plurality of multicast broadcast services includes the target multicast broadcast service. The plurality of indicators include an indicator corresponding to the target multicast broadcast service. For example, as shown in Table 4, the plurality of indicators may be carried in signaling that includes the target multicast broadcast service and that is sent by the core network device to the access network device.

**Table 4**

| |
|---|
| Identifier list of a multicast broadcast service |
| Other information |
| Indicator list |

In a possible example, the correspondences between the plurality of indicators and the identifiers of the plurality of multicast broadcast services may be one-to-one correspondence. To be specific, one indicator corresponds to an identifier of one multicast broadcast service, and different indicators correspond to different identifiers of multicast broadcast services. An indicator indicates whether a receiver of a multicast broadcast service corresponding to the indicator includes the narrowband terminal and the broadband terminal.

For example, the identifier list of the multicast broadcast service in Table 4 may include K identifiers, and the indicator list may include K indicators. The K multicast broadcast services may include one or more target multicast broadcast services. K is a positive integer greater than 1.

For example, the correspondence between the indicator and the identifier of the multicast broadcast service may be a cross correspondence. For example, a 1^{st} indicator corresponds to an identifier of a last multicast broadcast service, and a 2^{nd} indicator corresponds to an identifier of a last second multicast broadcast service. Alternatively, the correspondence between the indicator and the identifier of the multicast broadcast service is a correspondence in sequence. For example, a k^{th} indicator corresponds to an identifier of a k^{th} multicast broadcast service, where k is a positive integer in 2 to K.

For example, K is equal to 4, and the identifier of the multicast broadcast service is the TMGI. Assuming that the identifier list of the multicast broadcast service is {a TMGI #1, a TMGI #2, a TMGI #3, and a TMGI #4}, a corresponding indicator list may be {an indicator 1, an indicator 2, an indicator 3, and an indicator 4}. A correspondence between an identifier and the indicator may be as follows. The indicator 1 corresponds to the TMGI #1, indicating a type of a receiver of a multicast broadcast service identified by the TMGI #1. The indicator 2 corresponds to the TMGI #2, indicating a type of a receiver of a multicast broadcast service identified by the TMGI #2. The indicator 3 corresponds to the TMGI #3, indicating a type of a receiver of a multicast broadcast service identified by the TMGI #3. The indicator 4 corresponds to the TMGI #4, indicating a type of a receiver of a multicast broadcast service identified by the TMGI #4.

In another possible example, the plurality of indicators correspond to a part of the identifiers of the plurality of multicast broadcast service. For example, the identifier list of the multicast broadcast service in Table 4 may include K identifiers, and the indicator list may include J indicators, where J is less than K. The J indicators correspond to J identifiers in the K identifiers, for example, correspond to first J identifiers, last J identifiers, or intermediate J identifiers. This is not limited. A receiver of a multicast broadcast service identified by an identifier that does not correspond to an indicator may be the broadband terminal or the narrowband terminal by default.

Based on the foregoing solution, the indication information with a service as a granularity is used, so that a type of a receiver corresponding to each service can be more flexibly indicated, thereby implementing an indication that different services correspond to types of different receivers.

In still another possible implementation, the indication information includes one indicator. There is a correspondence between the indicator and the identifiers of the plurality of multicast broadcast services. Each of the plurality of multicast broadcast services is the target multicast broadcast service.

For example, as shown in Table 5, the indicator may be carried in signaling that includes the target multicast broadcast service and that is sent by the core network device to the access network device. The identifier list of the multicast broadcast service may include X identifiers. The indicator indicates that receivers of X multicast broadcast services identified by the X identifiers include the narrowband terminal and the broadband terminal.

**Table 5**

| |
|---|
| Identifier list of a multicast broadcast service |
| Other information |
| Indicator |

Optionally, the X multicast broadcast services may be a plurality of multicast broadcast services of a single cell. Alternatively, the X multicast broadcast services may be multicast broadcast services of a plurality of cells managed by the access network device. Alternatively, the X multicast broadcast services may be multicast broadcast services of a plurality of cells managed by a plurality of access network devices associated with the core network device. This is not specifically limited in this application.

According to this solution, one indicator indicates types of receivers of the plurality of multicast broadcast services, so that signaling overheads of the indication information can be reduced.

S503: The access network device sends an MCCH to the narrowband terminal and the broadband terminal. Correspondingly, the narrowband terminal and the broadband terminal receive the MCCH from the access network device.

The MCCH is used to carry configuration information of the MTCH of the target multicast broadcast service. When the indication information indicates that the receiver of the target multicast broadcast service includes the narrowband terminal and the broadband terminal, the MCCH meets one or more of the following limitations.
(1) A first frequency domain resource corresponding to the MCCH does not exceed a maximum bandwidth capability of the narrowband terminal.

Optionally, the first frequency domain resource corresponding to the MCCH may be a maximum bandwidth that can be occupied by the MCCH. For example, the first frequency domain resource may be a CFR, and the first frequency domain resource corresponding to the MCCH is a CFR of the MCCH. The CFR of the MCCH may be understood as the maximum bandwidth that can be occupied by the MCCH.

(2) A scheduling bandwidth occupied by the MCCH does not exceed the maximum bandwidth capability of the narrowband terminal.

The scheduling bandwidth occupied by the MCCH is an actual bandwidth occupied by the MCCH. The scheduling bandwidth occupied by the MCCH is a part or all of bandwidths of the CFR of the MCCH. When the scheduling bandwidth occupied by the MCCH is a part of bandwidths of the CFR of the MCCH, the CFR of the MCCH may exceed the maximum bandwidth capability of the narrowband terminal.

Optionally, before step S503, the method may further include: The access network device determines the MCCH.

According to this solution, in this application, it is limited the first frequency domain resource corresponding to the MCCH or the scheduling bandwidth occupied by the MCCH does not exceed the maximum bandwidth capability of the narrowband terminal. Therefore, the narrowband terminal is capable of receiving the MCCH. Therefore, under this limitation, the access network device may send the MCCH once, and both the narrowband terminal and the broadband terminal can receive the MCCH. In comparison with a case in which the access network device separately sends a SIBX, the MCCH, and the MTCH to the narrowband terminal and the broadband terminal, resource overheads are reduced.

In addition, because the access network device sends the MCCH once to the narrowband terminal and the broadband terminal, one RNTI may be used to scramble the MCCH, in other words, the narrowband terminal and the broadband terminal may share one RNTI, to reduce RNTI overheads.

Optionally, the MCCH may carry configuration information of a plurality of MTCHs. It is assumed that a multicast broadcast service whose receiver includes the narrowband terminal and does not include the broadband is denoted as a first type of service; a multicast broadcast service whose receiver includes the broadband terminal and does not include the narrowband terminal is denoted as a second type of service; and a multicast broadcast service whose receiver includes the narrowband terminal and the broadband terminal is denoted as a third type of service. In this case, as shown in FIG. 6, there may be the following four cases for the plurality of MTCHs.
(1) The plurality of MTCHs include an MTCH of the second type of service and an MTCH of the third type of service.
(2) The plurality of MTCHs include an MTCH of the first type of service and an MTCH of the third type of service.
(3) The plurality of MTCHs include an MTCH of the first type of service, an MTCH of the second type of service, and an MTCH of the third type of service.
(4) The plurality of MTCHs include an MTCH of the third type of service.

Optionally, when configuration information that is of the MTCH and that is carried by the MCCH meets any one of the foregoing four cases, a total amount of configuration information of the MTCH does not exceed a threshold, and the threshold is an upper limit of a quantity of MTCH configurations for the broadband terminal or the narrowband terminal that are carried by the MCCH. To be specific, if an upper limit of a quantity of configurations is X when the MCCH carries only configuration information of the MTCH of the first type of service or carries only configuration information of the MTCH of the second type of service, an upper limit of configuration data is also X when the configuration information that is of the MTCH and that is carried by the MCCH meets one of the foregoing four cases.

Optionally, the threshold may be determined based on a transport block size (transport block size, TBS) of the MCCH and a data packet size of the configuration information that is of the MTCH and that is carried by the MCCH.

Because the TBS of the MCCH is limited, an amount of configuration information that is of the MTCH and that is carried by the MCCH cannot be increased infinitely. According to this solution, the amount of configuration information of the MTCH is limited, thereby meeting a TBS limitation of the MCCH.

It may be understood that the configuration information of the MTCH in FIG. 6 is only for illustration of the type of the receiver of the multicast broadcast service, and the amount of configuration information of the MTCH is not limited to 3.

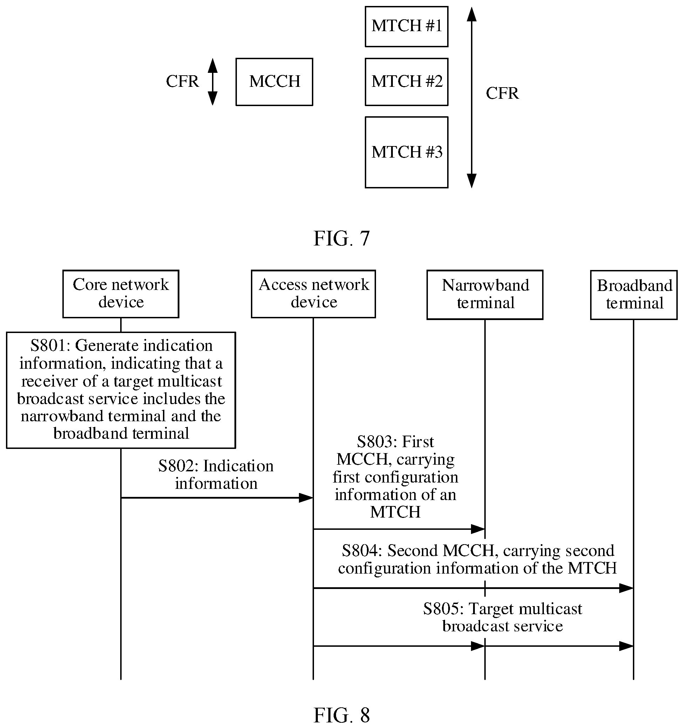

Optionally, the CFR of the MCCH may be the same as or different from a CFR of the MTCH. This is not specifically limited in this application. As shown in FIG. 7, the CFR of the MCCH is the same as a CFR of an MTCH #2, and is different from a CFR of an MTCH #1 and a CFR of an MTCH #3. When the CFR of the MCCH is the same as the CFR of the MTCH, radio frequency (radio frequency, RF) retuning (retuning) of a terminal may be reduced.

S504: The access network device sends the target multicast broadcast service to the narrowband terminal and the broadband terminal on a frequency domain resource corresponding to the MTCH. Correspondingly, the narrowband terminal and the broadband terminal receive the target multicast broadcast service from the access network device on the frequency domain resource corresponding to the MTCH.

It may be understood that the MTCH is the MTCH of the target multicast broadcast service in step S503. The MTCH is mapped to a PDSCH for transmission, and the frequency domain resource corresponding to the MTCH is a frequency domain resource in the PDSCH.

Optionally, after receiving the MCCH, the narrowband terminal and the broadband terminal may obtain the configuration information that is of the MTCH of the target multicast broadcast service and that is carried in the MCCH, so that the target multicast broadcast service can be received, based on the configuration information, on the frequency domain resource corresponding to the MTCH.

Optionally, that the access network device sends the target multicast broadcast service to the narrowband terminal and the broadband terminal on a frequency domain resource corresponding to the MTCH may include: The access network device sends M target multicast broadcast services to the narrowband terminal and the broadband terminal on frequency domain resources corresponding to N MTCHs, where N and M are positive integers.

In a possible implementation, a value of N and a value of M may be equal to 1. In this scenario, the MCCH may carry one piece of configuration information of the MTCH of the target multicast broadcast service. A bandwidth of a frequency domain resource that corresponds to the MTCH and that is configured by using the configuration information does not exceed the maximum bandwidth capability of the narrowband terminal. In view of this, when the access network device sends the target multicast broadcast service on the frequency domain resource corresponding to the MTCH, both the narrowband terminal and the broadband terminal may receive the target multicast broadcast service. In other words, in this possible implementation, the multicast broadcast service whose receiver includes the narrowband terminal and the broadband terminal may be sent only once, thereby further reducing the resource overheads.

In another possible implementation, a value of N and a value of M may be equal to 2. In this scenario, the MCCH may carry two pieces of configuration information of the MTCH of the target multicast broadcast service. The two pieces of configuration information are denoted as configuration information A of the MTCH and configuration information B of the MTCH.

A frequency domain resource that corresponds to the MTCH and that is configured by using the configuration information A is denoted as a frequency domain resource A. The frequency domain resource A does not exceed the maximum bandwidth capability of the narrowband terminal. A frequency domain resource that corresponds to the MTCH and that is configured by using the configuration information B is denoted as a frequency domain resource B. The frequency domain resource B does not exceed a maximum bandwidth capability of the broadband terminal.

Correspondingly, the access network device sends the target multicast broadcast service to the narrowband terminal on the frequency domain resource A, and the narrowband terminal receives the target multicast broadcast service from the access network device on the frequency domain resource A. In addition, the access network device sends the target multicast broadcast service to the broadband terminal on the frequency domain resource B, and the broadband terminal receives the target multicast broadcast service from the access network device on the frequency domain resource B.

In other words, in this possible implementation, the access network device may separately send the multicast broadcast service to the narrowband terminal and the broadband terminal, to improve flexibility of sending the multicast broadcast service.

In still another possible implementation, a value of N and a value of M may be unequal. For example, the value of N is less than the value of M. For example, N is equal to 1, and M is equal to 2. In other words, the access network device may send two target multicast broadcast services on a frequency domain resource corresponding to one MTCH. Alternatively, the value of N may be greater than the value of M. A value relationship between N and M is not specifically limited in this application.

In the foregoing solutions, the MCCH is limited so that the MCCH can be sent once, thereby reducing the resource overheads. In addition, this application further provides another multicast broadcast service sending method, to reduce resource overheads by limiting an MTCH to being sent once.

FIG. 8 shows another multicast broadcast service sending method according to this application. The method may be applied to the communication system shown in FIG. 3, and includes the following steps.

S801: A core network device generates indication information.

S802: The core network device sends the indication information to an access network device. Correspondingly, the access network device receives the indication information from the core network device.

For detailed descriptions of step S801 and step S802, refer to the related descriptions of step S501 and step S502. Details are not described herein again.

S803: The access network device sends a first MCCH to a narrowband terminal. Correspondingly, the narrowband terminal receives the first MCCH from the access network device.

The first MCCH is used to carry first configuration information of an MTCH of a target multicast broadcast service. A frequency domain resource that corresponds to the MTCH and that is configured by using the first configuration information is the same as a frequency domain resource that corresponds to the MTCH and that is configured by using second configuration information. The second configuration information is configuration information of the MTCH of the target multicast broadcast service for a broadband terminal.

For example, the first configuration information and the second configuration information may be used to configure a same carrier for the MTCH of the target multicast broadcast service, so that frequency domain resources that correspond to the MTCH and that are configured by using the first configuration information and the second configuration information are the same.

It may be understood that a CFR or a scheduling bandwidth of the first MCCH does not exceed a maximum bandwidth capability of the narrowband terminal.

S804: The access network device sends a second MCCH to the broadband terminal. Correspondingly, the broadband terminal receives the second MCCH from the access network device.

The second MCCH is used to carry the second configuration information of the MTCH of the target multicast broadcast service. The frequency domain resource that corresponds to the MTCH and that is configured by using the second configuration information is the same as the frequency domain resource that corresponds to the MTCH and that is configured by using first configuration information. The first configuration information is configuration information of the MTCH of the target multicast broadcast service for the narrowband terminal.

It may be understood that a CFR or a scheduling bandwidth of the second MCCH does not exceed a maximum bandwidth capability of the broadband terminal. A relationship between the CFR of the second MCCH and the maximum bandwidth capability of the narrowband terminal is not limited.

Optionally, a frequency domain resource corresponding to the MTCH of the target multicast broadcast service may include a part or all of overlapping resources between a CFR that is of the MTCH and that is for the narrowband terminal and a CFR that is of the MTCH and that is for the broadband terminal.

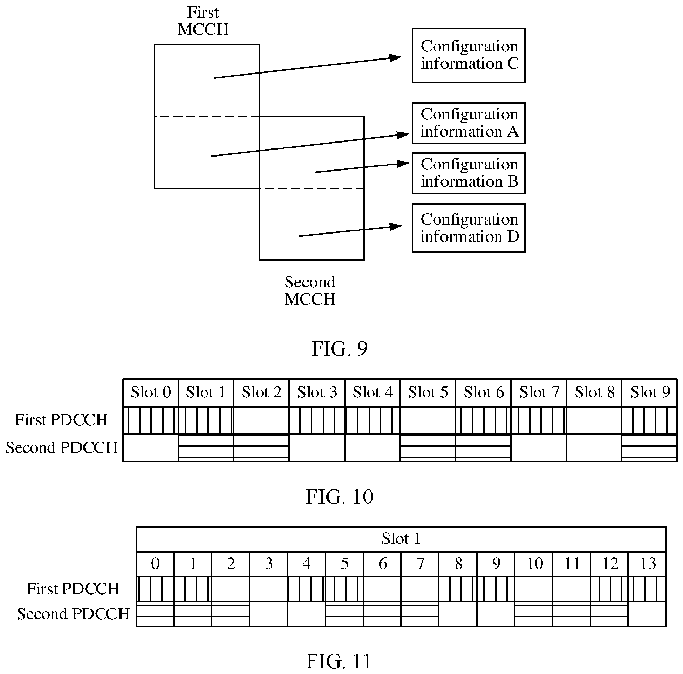

Optionally, as shown in FIG. 9, there may be an overlapping part between a frequency domain resource occupied by the first MCCH and a frequency domain resource occupied by the second MCCH. The overlapping part in the first MCCH may carry the first configuration information (represented by configuration information A in FIG. 9) of the MTCH of the target multicast broadcast service, and the overlapping part in the second MCCH may carry the second configuration information (represented by configuration information B in FIG. 9) of the MTCH of the target multicast broadcast service. In addition, a non-overlapping part in the first MCCH may carry configuration information (represented by configuration information C in FIG. 9) of an MTCH of a first type of service, and a non-overlapping part in the second MCCH may carry configuration information (represented by configuration information D in FIG. 9) of an MTCH of a second type of service. For the first type of service and the second type of service, refer to the related descriptions of step S503. Details are not described herein again.

It should be noted that an execution sequence of step S803 and step S804 is not limited in this application. For example, step S803 may be performed first, and then step S804 is performed; step S804 may be performed first, and then step S803 is performed; or step S803 and step S804 may be simultaneously performed. This is not limited.

S805: The access network device sends the target multicast broadcast service to the narrowband terminal and the broadband terminal on the frequency domain resource corresponding to the MTCH of the target multicast broadcast service. Correspondingly, the narrowband terminal and the broadband terminal receive the target multicast broadcast service from the access network device on the frequency domain resource corresponding to the MTCH.

Optionally, after receiving the first MCCH, the narrowband terminal may obtain the first configuration information that is of the MTCH of the target multicast broadcast service and that is carried in the first MCCH, so that the target multicast broadcast service can be received, based on the first configuration information, on the frequency domain resource corresponding to the MTCH. The broadband terminal may obtain the second configuration information that is of the target multicast broadcast service and that is carried in the second MCCH, so that the target multicast broadcast service can be received, based on the second configuration information, on the frequency domain resource corresponding to the MTCH.

According to this solution, a frequency domain resource that corresponds to the MTCH and that is configured by using the configuration information that is of the MTCH and that is sent to the narrowband terminal is the same as a frequency domain resource that corresponds to the MTCH and that is configured by using the configuration information that is of the MTCH and that is sent to the broadband terminal, so that both the narrowband terminal and the broadband terminal can receive a multicast broadcast service sent by the access network device on the frequency domain resource. Therefore, a multicast broadcast service whose receiver includes the narrowband terminal and the broadband terminal may be sent once by the access network device. In comparison with a case in which the access network device separately sends a SIBX, the MCCH, and the MTCH to the narrowband terminal and the broadband terminal, resource overheads can be reduced.

Optionally, the first configuration information includes a first G-RNTI, and the second configuration information includes a second G-RNTI. The first G-RNTI and the second G-RNTI are used to scramble the target multicast broadcast service. The first G-RNTI and the second G-RNTI may be the same.

According to this solution, when a same multicast broadcast service is sent to the narrowband terminal and the broadband terminal on a same frequency domain resource, the narrowband terminal and the broadband terminal share one G-RNTI, so that available G-RNTI resources can be saved.

Optionally, the first configuration information may include a first identifier that is of the target multicast broadcast service and that corresponds to the first G-RNRI, and the second configuration information may include a second identifier that is of the target multicast broadcast service and that corresponds to the second G-RNTI. The first identifier and the second identifier may be the same.

Optionally, the frequency domain resource corresponding to the MTCH of the target multicast broadcast service is scheduled by using downlink control information (downlink control information, DCI) carried by a PDCCH. For example, the frequency domain resource corresponding to the MTCH of the target multicast broadcast service is scheduled for the narrowband terminal by using first DCI, and the frequency domain resource corresponding to the MTCH of the target multicast broadcast service is scheduled for the broadband terminal by using second DCI. The first DCI is carried by using a first PDCCH. In other words, the first PDCCH is used to carry the first DCI. The second DCI is carried by using a second PDCCH. In other words, the second PDCCH is used to carry the second PDCCH.

Optionally, a candidate frequency domain position of the first PDCCH and a candidate frequency domain position of the second PDCCH partially or completely overlap. For example, a plurality of candidate frequency domain positions of the second PDCCH may include at least one candidate frequency domain position of the first PDCCH.

Optionally, when the candidate frequency domain position of the first PDCCH and the candidate frequency domain position of the second PDCCH are represented by using control channel elements (control channel elements, CCEs), mapping manners of the CCEs corresponding to the first PDCCH and the second PDCCH to resource element groups (resource element groups, REGs) may be both non-interleaving manners. The non-interleaving manner may be configured by using a parameter in a control resource set (control resource set, CORESET).

According to this solution, when the candidate frequency domain position of the second PDCCH and the candidate frequency domain position of the first PDCCH partially or completely overlap, the first DCI and the second DCI may occupy an overlapping candidate frequency domain position. To be specific, a frequency domain position occupied by DCI for scheduling the frequency domain resource corresponding to the MTCH of the target multicast broadcast service for the narrowband terminal may be the same as a frequency domain position occupied by DCI for scheduling the frequency domain resource corresponding to the MTCH of the target multicast broadcast service for the broadband terminal, so that frequency domain resource overheads can be reduced.

Optionally, a candidate time domain position of the first PDCCH and a candidate time domain position of the second PDCCH partially or completely overlap. Further, an overlapping part between the candidate time domain position of the first PDCCH and the candidate time domain position of the second PDCCH includes at least two consecutive symbols in one slot.

For example, a monitoring slot may be configured by using parameters such as a monitoring periodicity, duration, and an offset of search space (search space), so that at least one overlapping slot exists between a monitoring slot of the first PDCCH and a monitoring slot (slot) of the second PDCCH. As shown in FIG. 10, the monitoring slot of the first PDCCH includes a slot 0, a slot 1, a slot 3, a slot 4, a slot 6, a slot 7, and a slot 9. The monitoring slot of the second PDCCH includes the slot 1, a slot 2, a slot 5, the slot 6, and the slot 9. The overlapping slot includes the slot 1, the slot 6, and the slot 9.

Further, a monitoring mode in a single slot may be configured by using an in-slot symbol monitoring mode of the search space and duration of the CORESET, so that at least two consecutive symbols overlap in the overlapping slot. As shown in FIG. 11, symbols in the slot 1 are used as examples. Monitoring symbols that are of the first PDCCH and that are in the slot 1 include a symbol 0, a symbol 1, a symbol 4, a symbol 5, a symbol 8, a symbol 9, a symbol 12, and a symbol 13. Monitoring symbols that are of the second PDCCH and that are in the slot 1 include the symbol 0, the symbol 1, a symbol 2, the symbol 5, a symbol 6, a symbol 7, a symbol 10, a symbol 11, and the symbol 12. Two consecutive overlapping symbols are the symbol 0 and the symbol 1.

According to this solution, when the candidate time domain position of the second PDCCH and the candidate time domain position of the first PDCCH partially or completely overlap, the first DCI and the second DCI may occupy an overlapping candidate time domain position. To be specific, a time domain position occupied by the DCI for scheduling the frequency domain resource corresponding to the MTCH of the target multicast broadcast service for the narrowband terminal may be the same as a time domain position occupied by the DCI for scheduling the frequency domain resource corresponding to the MTCH of the target multicast broadcast service for the broadband terminal, so that time domain resource overheads can be reduced.

Optionally, the first DCI and the second DCI are used to respectively schedule a same frequency domain resource for the narrowband terminal and the broadband terminal. Therefore, the first DCI and the second DCI may be the same. In this scenario, the access network device may send the first DCI (or the second DCI) to the narrowband terminal and the broadband terminal on a first time-frequency resource. Correspondingly, the narrowband terminal and the broadband terminal receive the first DCI (or the second DCI) from the access network device on the first time-frequency resource.

A frequency domain position of the first time-frequency resource is located in an overlapping part between the candidate frequency domain position of the first PDCCH and the candidate frequency domain position of the second PDCCH. A time domain position of the first time-frequency resource is located in the overlapping part between the candidate time domain position of the first PDCCH and the candidate time domain position of the second PDCCH.

According to this solution, the access network device may send, to the narrowband terminal and the broadband terminal on a same time-frequency resource, DCI for scheduling the frequency domain resource corresponding to the MTCH. To be specific, the DCI for scheduling the frequency domain resource corresponding to the MTCH for the narrowband terminal and the DCI for scheduling the frequency domain resource corresponding to the MTCH for the broadband terminal are same DCI, and it is unnecessary to respectively send different DCI to the narrowband terminal and the broadband terminal on different time-frequency resources, so that scheduling resource overheads can be reduced.

It may be understood that in the foregoing embodiments, the method and/or the step implemented by the core network device may alternatively be implemented by a component (for example, a processor, a chip, a chip system, a circuit, a logical module, or software) that can be used in the core network device; the method and/or the step implemented by the access network device may alternatively be implemented by a component (for example, a processor, a chip system, a circuit, a logical module, or software) that can be used in the access network device; and the method and/or the step implemented by the terminal may alternatively be implemented by a component (for example, a processor, a chip, a chip system, a circuit, a logical module, or software) that may be used in the terminal.

The foregoing mainly describes the solutions provided in this application from a perspective of interaction between devices. Correspondingly, this application further provides a communication apparatus. The communication apparatus is configured to implement the foregoing methods. The communication apparatus may be the access network device in the foregoing method embodiments or a component that can be used in the access network device; may be the terminal (the narrowband terminal or the broadband terminal) in the foregoing method embodiments or a component that can be used in the terminal; or may be the core network device in the foregoing method embodiments or a component that can be used in the core network device.

It may be understood that to implement the foregoing functions, the communication apparatus includes a corresponding hardware structure and/or a corresponding software module for performing each function. A person skilled in the art should easily be aware that in combination with units and algorithm steps of the examples described in embodiments disclosed in this specification, this application can be implemented in a form of hardware or a combination of hardware and computer software. Whether a function is performed by the hardware or the hardware driven by the computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, module division is an example, and is merely a logical function division. During actual implementation, another division manner may be used.

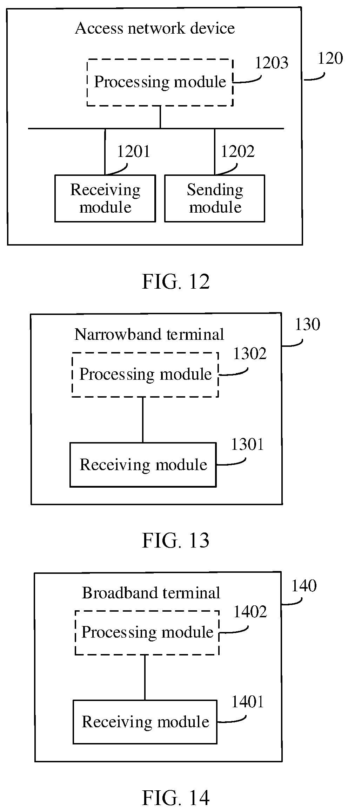

In an implementation scenario, an example in which the communication apparatus is the access network device in the foregoing method embodiments is used. FIG. 12 is a diagram of a structure of an access network device 120. The access network device 120 includes a receiving module 1201 and a sending module 1202.

In some embodiments, the access network device 120 may further include a processing module 1203. Further, the access network device 120 may further include a storage module (not shown in FIG. 12), configured to store program instructions and data.

In some embodiments, the receiving module 1201 and the sending module 1202 may be collectively referred to as a transceiver module. The receiving module 1201 may include a receiving circuit, a receiver, a receiver device, or an input interface. The sending module 1202 may include a sending circuit, a transmitter, a transmitter device, or an output interface.

In some embodiments, the receiving module 1201 and the sending module 1202 may be respectively configured to perform receiving and sending steps performed by the access network device in the foregoing method embodiments, and/or configured to support another process of the technology described in this specification. The processing module 1203 may be configured to perform processing (for example, determining) steps performed by the access network device in the foregoing method embodiments, and/or configured to support another process of the technology described in this specification.

In a possible implementation,
the receiving module 1201 is configured to receive indication information from a core network device, where the indication information indicates that a receiver of a target multicast broadcast service includes a narrowband terminal and a broadband terminal. The sending module 1202 is configured to send an MCCH to the narrowband terminal and the broadband terminal, where the MCCH is used to carry configuration information of an MTCH of the target multicast broadcast service, and a first frequency domain resource corresponding to the MCCH or a scheduling bandwidth occupied by the MCCH does not exceed a maximum bandwidth capability of the narrowband terminal. The sending module 1202 is further configured to send the target multicast broadcast service to the narrowband terminal and the broadband terminal on a frequency domain resource corresponding to the MTCH.

Optionally, that the sending module 1202 is configured to send the target multicast broadcast service to the narrowband terminal and the broadband terminal on the frequency domain resource corresponding to the MTCH includes: The sending module 1202 is configured to send M target multicast broadcast services to the narrowband terminal and the broadband terminal on frequency domain resources corresponding to N MTCHs, where N and M are positive integers.

Optionally, the processing module 1203 is configured to generate the MCCH.

In another possible implementation,
the receiving module 1201 is configured to receive the indication information from the core network device, where the indication information indicates that the receiver of the target multicast broadcast service includes the narrowband terminal and the broadband terminal. The sending module 1202 is configured to: send a first MCCH to the narrowband terminal; and send a second MCCH to the broadband terminal, where the first MCCH is used to carry first configuration information of an MTCH of the target multicast broadcast service, and the second MCCH is used to carry second configuration information of the MTCH. A frequency domain resource that corresponds to the MTCH and that is configured by using the first configuration information is the same as a frequency domain resource that corresponds to the MTCH and that is configured by using the second configuration information. The sending module 1202 is further configured to send the target multicast broadcast service to the narrowband terminal and the broadband terminal on the frequency domain resource corresponding to the MTCH.

Optionally, the sending module 1202 is further configured to send first DCI to the narrowband terminal and the broadband terminal on a first time-frequency resource. A frequency domain position of the first time-frequency resource is located in an overlapping part between a candidate frequency domain position of a first PDCCH and a candidate frequency domain position of a second PDCCH. A time domain position of the first time-frequency resource is located in an overlapping part between a candidate time domain position of the first PDCCH and a candidate time domain position of the second PDCCH.

All related content of the steps in the foregoing method embodiments may be cited in function descriptions of the corresponding functional modules. Details are not described herein again.

In this application, the access network device 120 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the access network device 120 may be in a form of the communication apparatus 400 shown in FIG. 4.

In an example, a function/implementation process of the processing module 1203 in FIG. 12 may be implemented by the processor 401 in the communication apparatus 400 shown in FIG. 4 by invoking the computer-executable instructions stored in the memory 403. Functions/implementation processes of the receiving module 1201 and the sending module 1202 in FIG. 12 may be implemented through the communication interface 404 in the communication apparatus 400 shown in FIG. 4.

In some embodiments, when the access network device 120 in FIG. 12 is a chip or a chip system, the functions/implementation processes of the receiving module 1201 and the sending module 1202 may be implemented through an input/output interface (or a communication interface) of the chip or the chip system, and the function/implementation process of the processing module 1203 may be implemented through a processor (or a processing circuit) of the chip or the chip system.

Because the access network device 120 provided in this embodiment may perform the foregoing methods, for technical effects that can be obtained by the access network device 120, refer to the foregoing method embodiments. Details are not described herein again.

In an implementation scenario, an example in which the communication apparatus is the narrowband terminal in the foregoing method embodiments is used. FIG. 13 is a diagram of a structure of a narrowband terminal 130. The narrowband terminal 130 includes a receiving module 1301.

In some embodiments, the narrowband terminal 130 may further include a processing module 1302. Further, the narrowband terminal 130 may further include a storage module and a sending module (not shown in FIG. 13). The storage module is configured to store program instructions and data, and the sending module is configured to implement a sending step.

In some embodiments, the receiving module 1301 may include a receiving circuit, a receiver, a receiver device, or an input interface.

In some embodiments, the receiving module 1301 may be respectively configured to perform receiving steps performed by the narrowband terminal in the foregoing method embodiments, and/or configured to support another process of the technology described in this specification. The processing module 1302 may be configured to perform processing (for example, determining) steps performed by the narrowband terminal in the foregoing method embodiments, and/or configured to support another process of the technology described in this specification.

In a possible implementation,
the receiving module 1301 is configured to receive an MCCH from an access network device, where MCCH is used to carry configuration information of an MTCH of a target multicast broadcast service, and a first frequency domain resource corresponding to the MCCH or a scheduling bandwidth occupied by the MCCH does not exceed a maximum bandwidth capability of the narrowband terminal. The receiving module 1301 is further configured to receive the target multicast broadcast service from the access network device on a frequency domain resource corresponding to the MTCH.

In another possible implementation,
the receiving module 1301 is configured to receive a first MCCH from the access network device, where the first MCCH is used to carry first configuration information of the MTCH of the target multicast broadcast service. A frequency domain resource that corresponds to the MTCH and that is configured by using the first configuration information is the same as a frequency domain resource that corresponds to the MTCH and that is configured by using second configuration information, and the second configuration information is configuration information of the MTCH for a broadband terminal. The receiving module 1301 is further configured to receive the target multicast broadcast service from the access network device on the frequency domain resource corresponding to the MTCH.

Optionally, the receiving module 1301 is further configured to receive first DCI from the access network device on a first time-frequency resource. A frequency domain position of the first time-frequency resource is located in an overlapping part between a candidate frequency domain position of a first PDCCH and a candidate frequency domain position of a second PDCCH. A time domain position of the first time-frequency resource is located in an overlapping part between a candidate time domain position of the first PDCCH and a candidate time domain position of the second PDCCH.

All related content of the steps in the foregoing method embodiments may be cited in function descriptions of the corresponding functional modules. Details are not described herein again.

In this application, the narrowband terminal 130 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the narrowband terminal 130 may be in a form of the communication apparatus 400 shown in FIG. 4.

In an example, a function/implementation process of the processing module 1302 in FIG. 13 may be implemented by the processor 401 in the communication apparatus 400 shown in FIG. 4 by invoking the computer-executable instructions stored in the memory 403. Functions/implementation processes of the receiving module 1301 and the sending module in FIG. 13 may be implemented through the communication interface 404 in the communication apparatus 400 shown in FIG. 4.

In some embodiments, when the narrowband terminal 130 in FIG. 13 is a chip or a chip system, the functions/implementation processes of the receiving module 1301 and the sending module may be implemented through an input/output interface (or a communication interface) of the chip or the chip system, and the function/implementation process of the processing module 1302 may be implemented through a processor (or a processing circuit) of the chip or the chip system.

Because the narrowband terminal 130 provided in this embodiment may perform the foregoing methods, for technical effects that can be obtained by the narrowband terminal 130, refer to the foregoing method embodiments. Details are not described herein again.

In an implementation scenario, an example in which the communication apparatus is the broadband terminal in the foregoing method embodiments is used. FIG. 14 is a diagram of a structure of a broadband terminal 140. The broadband terminal 140 includes a receiving module 1401.

In some embodiments, the broadband terminal 140 may further include a processing module 1402. Further, the broadband terminal 140 may further include a storage module and a sending module (not shown in FIG. 14). The storage module is configured to store program instructions and data, and the sending module is configured to implement a sending step.

In some embodiments, the receiving module 1401 may include a receiving circuit, a receiver, a receiver device, or an input interface.

In some embodiments, the receiving module 1401 may be respectively configured to perform receiving steps performed by the broadband terminal in the foregoing method embodiments, and/or configured to support another process of the technology described in this specification. The processing module 1402 may be configured to perform processing (for example, determining) steps performed by the broadband terminal in the foregoing method embodiments, and/or configured to support another process of the technology described in this specification.

In a possible implementation,
the receiving module 1401 is configured to receive an MCCH from an access network device, where MCCH is used to carry configuration information of an MTCH of a target multicast broadcast service, and a first frequency domain resource corresponding to the MCCH or a scheduling bandwidth occupied by the MCCH does not exceed a maximum bandwidth capability of the broadband terminal. The receiving module 1401 is further configured to receive the target multicast broadcast service from the access network device on a frequency domain resource corresponding to the MTCH.

In another possible implementation,
the receiving module 1401 is configured to receive a second MCCH from the access network device, where the second MCCH is used to carry second configuration information of the MTCH of a target multicast broadcast service. A frequency domain resource that corresponds to the MTCH and that is configured by using the second configuration information is the same as a frequency domain resource that corresponds to the MTCH and that is configured by using first configuration information, and the first configuration information is configuration information of the MTCH for a narrowband terminal. The receiving module 1401 is further configured to receive the target multicast broadcast service from the access network device on the frequency domain resource corresponding to the MTCH.

Optionally, the receiving module 1401 is further configured to receive first DCI from the access network device on a first time-frequency resource. A frequency domain position of the first time-frequency resource is located in an overlapping part between a candidate frequency domain position of a first PDCCH and a candidate frequency domain position of a second PDCCH. A time domain position of the first time-frequency resource is located in an overlapping part between a candidate time domain position of the first PDCCH and a candidate time domain position of the second PDCCH.

All related content of the steps in the foregoing method embodiments may be cited in function descriptions of the corresponding functional modules. Details are not described herein again.

In this application, the broadband terminal 140 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the broadband terminal 140 may be in a form of the communication apparatus 400 shown in FIG. 4.

In an example, a function/implementation process of the processing module 1402 in FIG. 14 may be implemented by the processor 401 in the communication apparatus 400 shown in FIG. 4 by invoking the computer-executable instructions stored in the memory 403. Functions/implementation processes of the receiving module 1401 and the sending module in FIG. 14 may be implemented through the communication interface 404 in the communication apparatus 400 shown in FIG. 4.

In some embodiments, when the broadband terminal 140 in FIG. 14 is a chip or a chip system, the functions/implementation processes of the receiving module 1401 and the sending module may be implemented through an input/output interface (or a communication interface) of the chip or the chip system, and the function/implementation process of the processing module 1402 may be implemented through a processor (or a processing circuit) of the chip or the chip system.

Because the broadband terminal 140 provided in this embodiment may perform the foregoing methods, for technical effects that can be obtained by the broadband terminal 140, refer to the foregoing method embodiments. Details are not described herein again.

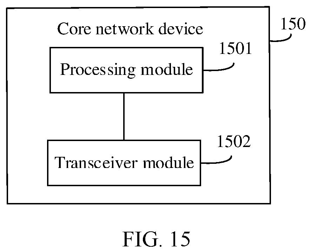

In an implementation scenario, an example in which the communication apparatus is the core network device in the foregoing method embodiments is used. FIG. 15 is a diagram of a structure of a core network device 150. The core network device 150 includes a processing module 1501 and a transceiver module 1502.

In some embodiments, the core network device 150 may further include a storage module (not shown in FIG. 15), configured to store program instructions and data.

In some embodiments, the transceiver module 1502 may also be referred to as a transceiver unit. The transceiver module 1502 may include a transceiver circuit, a transceiver machine, a transceiver, or a communication interface.

In some embodiments, the transceiver module 1502 may include a receiving module and a sending module, respectively configured to perform receiving and sending steps performed by the core network device in the foregoing method embodiments, and/or configured to support another process of the technology described in this specification. The processing module 1501 may be configured to perform processing (for example, generating) steps performed by the core network device in the foregoing method embodiments, and/or configured to support another process of the technology described in this specification.

In a possible implementation,
the processing module 1501 is configured to generate indication information, where the indication information indicates that a receiver of a target multicast broadcast service includes a narrowband terminal and a broadband terminal. The transceiver module 1502 is configured to send the indication information to an access network device.

All related content of the steps in the foregoing method embodiments may be cited in function descriptions of the corresponding functional modules. Details are not described herein again.

In some embodiments, in hardware implementation, a person skilled in the art may figure out that the core network device 150 may be in a form of the communication apparatus 400 shown in FIG. 4.

In an example, a function/implementation process of the processing module 1501 in FIG. 15 may be implemented by the processor 401 in the communication apparatus 400 shown in FIG. 4 by invoking the computer-executable instructions stored in the memory 403. Functions/implementation processes of the transceiver module 1502 in FIG. 15 may be implemented through the communication interface 404 in the communication apparatus 400 shown in FIG. 4.

In some embodiments, when the core network device 150 in FIG. 15 is a chip or a chip system, the functions/implementation processes of the transceiver module 1502 may be implemented through an input/output interface (or a communication interface) of the chip or the chip system, and the function/implementation process of the processing module 1501 may be implemented through a processor (or a processing circuit) of the chip or the chip system.

Because the core network device 150 provided in this embodiment may perform the foregoing methods, for technical effects that can be obtained by the core network device 150, refer to the foregoing method embodiments. Details are not described herein again.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to: receive computer-executable instructions (where the computer-executable instructions are stored in a memory, and may be directly read from the memory or via another component); and transmit the computer-executable instructions to the processor.

In still another possible implementation, the communication apparatus further includes a communication interface. The communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that for convenient and brief description, for detailed working processes of the foregoing system, apparatuses, and units, refer to corresponding processes in the foregoing method embodiments. Details are not described herein again.

It may be understood that the system, apparatuses, and methods described in this application may alternatively be implemented in another manner. For example, the apparatus embodiments described above are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, in a mechanical form, or in another form.

The units described as separate components may be or may not be physically separated, that is, may be located together in one place or distributed on a plurality of network units. Components displayed as units may be or may be not physical units. A part or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions described according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a good effect.

## Claims

1. A multicast broadcast service sending method, wherein the method comprises:
receiving (S502), indication information from a core network device, wherein the indication information indicates that a receiver of a target multicast broadcast service comprises a narrowband terminal and a broadband terminal;
sending (S503), a multicast control channel MCCH to the narrowband terminal and the broadband terminal, wherein the MCCH is used to carry configuration information of a multicast traffic channel MTCH of the target multicast broadcast service, and a first frequency domain resource corresponding to the MCCH or a scheduling bandwidth occupied by the MCCH does not exceed a maximum bandwidth capability of the narrowband terminal; and
sending (S504), the target multicast broadcast service to the narrowband terminal and the broadband terminal on a frequency domain resource corresponding to the MTCH.

2. The method according to claim 1, wherein the indication information comprises at least one indicator, there is a correspondence between the at least one indicator and an identifier of at least one multicast broadcast service, and the at least one multicast broadcast service comprises the target multicast broadcast service.

3. The method according to any one of claims 1 to 2, wherein the first frequency domain resource corresponding to the MCCH is a maximum bandwidth that can be occupied by the MCCH.

4. A multicast broadcast service sending method, wherein the method comprises:
receiving (S802), indication information from a core network device, wherein the indication information indicates that a receiver of a target multicast broadcast service comprises a narrowband terminal and a broadband terminal;
sending (S803), a first multicast control channel MCCH to the narrowband terminal, and sending (S804), a second MCCH to the broadband terminal, wherein the first MCCH is used to carry first configuration information of a multicast traffic channel MTCH of the target multicast broadcast service, and the second MCCH is used to carry second configuration information of the MTCH; and a frequency domain resource that corresponds to the MTCH and that is configured by using the first configuration information is the same as a frequency domain resource that corresponds to the MTCH and that is configured by using the second configuration information; and
sending (S805), the target multicast broadcast service to the narrowband terminal and the broadband terminal on the frequency domain resource corresponding to the MTCH.

5. The method according to claim 4, wherein the indication information comprises at least one indicator, there is a correspondence between the at least one indicator and an identifier of at least one multicast broadcast service, and the at least one multicast broadcast service comprises the target multicast broadcast service.

6. The method according to claim 4 or 5, wherein a candidate frequency domain position of a first physical downlink control channel PDCCH and a candidate frequency domain position of a second PDCCH partially or completely overlap; and
the first PDCCH is used to carry first downlink control information DCI, wherein the first DCI is used to schedule the frequency domain resource corresponding to the MTCH for the narrowband terminal; and the second PDCCH is used to carry second DCI, wherein the second DCI is used to schedule the frequency domain resource corresponding to the MTCH for the broadband terminal.

7. The method according to claim 6, wherein a candidate time domain position of the first PDCCH and a candidate time domain position of the second PDCCH partially or completely overlap.

8. The method according to claim 7, wherein the first DCI is the same as the second DCI, and the method further comprises:
sending the first DCI to the narrowband terminal and the broadband terminal on a first time-frequency resource, wherein a frequency domain position of the first time-frequency resource is located in an overlapping part between the candidate frequency domain position of the first PDCCH and the candidate frequency domain position of the second PDCCH, and a time domain position of the first time-frequency resource is located in an overlapping part between the candidate time domain position of the first PDCCH and the candidate time domain position of the second PDCCH.

9. A multicast broadcast service receiving method, wherein the method is applied to a narrowband terminal, and the method comprises:
receiving (S803), a first multicast control channel MCCH from an access network device, wherein the first MCCH is used to carry first configuration information of a multicast traffic channel MTCH of a target multicast broadcast service; and a frequency domain resource that corresponds to the MTCH and that is configured by using the first configuration information is the same as a frequency domain resource that corresponds to the MTCH and that is configured by using second configuration information, and the second configuration information is configuration information that is of the MTCH and that is for a broadband terminal; and
receiving (S805), the target multicast broadcast service from the access network device on the frequency domain resource corresponding to the MTCH.

10. A multicast broadcast service receiving method, wherein the method is applied to a broadband terminal, and the method comprises:
receiving (S804), a second multicast control channel MCCH from an access network device, wherein the second MCCH is used to carry second configuration information of a multicast traffic channel MTCH of a target multicast broadcast service; and a frequency domain resource that corresponds to the MTCH and that is configured by using the second configuration information is the same as a frequency domain resource that corresponds to the MTCH and that is configured by using first configuration information, and the first configuration information is configuration information that is of the MTCH and that is for a narrowband terminal; and
receiving (S805), the target multicast broadcast service from the access network device on the frequency domain resource corresponding to the MTCH.

11. The method according to claim 9 or 10, wherein the first configuration information comprises a first group radio network temporary identifier G-RNTI, the second configuration information comprises a second G-RNTI, the first G-RNTI is the same as the second G-RNTI, and the first G-RNTI and the second G-RNTI are used to scramble the target multicast broadcast service.

12. A communication apparatus, configured to implement the method steps as claimed in any one of claims 1 to 3.

13. A communication apparatus, configured to implement the method steps as claimed in any one of claims 4 to 8.

14. A communication apparatus, configured to implement the method steps as claimed in any one of claims 9 to 11.

15. A computer program product comprising computer instructions, wherein, when a part or all of the computer instructions are run on a computer, an access network device is caused to carry out the method of any one of claims 1 to 3, or an access network device is caused to carry out the method of any one of claims 4 to 8, or a narrowband terminal is caused to carry out the method of claim 9 or claim 11 when dependent on claim 9, or a broadband terminal is caused to carry out the method of claim 10 or claim 11 when dependent on claim 10.

## Patentansprüche

1. Multicast-Broadcast-Dienst-Sendeverfahren, wobei das Verfahren umfasst:
Empfangen (S502) von Anzeigeinformationen von einer Kernnetzwerkvorrichtung, wobei die Anzeigeinformationen angeben, dass ein Empfänger eines Ziel-Multicast-Broadcast-Dienstes ein Schmalband-Endgerät und ein Breitband-Endgerät umfasst; Senden (S503) eines Multicast-Steuerkanals MCCH an das Schmalband-Endgerät und das Breitband-Endgerät, wobei der MCCH verwendet wird, um
Konfigurationsinformationen eines Multicast-Verkehrskanals MTCH des Ziel-Multicast-Broadcast-Dienstes zu übertragen, und eine erste Frequenzbereichsressource, die dem MCCH entspricht, oder eine Planungsbandbreite, die durch den MCCH belegt ist, eine maximale Bandbreitenfähigkeit des Schmalband-Endgeräts nicht überschreitet; und
Senden (S504) des Ziel-Multicast-Broadcast-Dienstes an das Schmalband-Endgerät und das Breitband-Endgerät auf einer Frequenzbereichsressource, die dem MTCH entspricht.

2. Verfahren nach Anspruch 1, wobei die Anzeigeinformationen mindestens einen Anzeiger umfassen, eine Entsprechung zwischen dem mindestens einen Anzeiger und einer Kennung mindestens eines Multicast-Broadcast-Dienstes besteht und der mindestens eine Multicast-Broadcast-Dienst den Ziel-Multicast-Broadcast-Dienst umfasst.

3. Verfahren nach einem der Ansprüche 1 bis 2, wobei die erste Frequenzbereichsressource, die dem MCCH entspricht, eine maximale Bandbreite ist, die durch den MCCH belegt werden kann.

4. Multicast-Broadcast-Dienst-Sendeverfahren, wobei das Verfahren umfasst:
Empfangen (S802) von Anzeigeinformationen von einer Kernnetzwerkvorrichtung, wobei die Anzeigeinformationen angeben, dass ein Empfänger eines Ziel-Multicast-Broadcast-Dienstes ein Schmalband-Endgerät und ein Breitband-Endgerät umfasst;
Senden (S803) eines ersten Multicast-Steuerkanals MCCH an das Schmalband-Endgerät, und Senden (S804) eines zweiten MCCH an das Breitband-Endgerät, wobei der erste MCCH verwendet wird, um erste Konfigurationsinformationen eines Multicast-Verkehrskanals MTCH des Ziel-Multicast-Broadcast-Dienstes zu übertragen, und der zweite MCCH verwendet wird, um zweite Konfigurationsinformationen des MTCH zu übertragen; und eine Frequenzbereichsressource, die dem MTCH entspricht und die durch Verwenden der ersten Konfigurationsinformationen konfiguriert ist, die gleiche wie eine Frequenzbereichsressource ist, die dem MTCH entspricht und die durch Verwenden der zweiten Konfigurationsinformationen konfiguriert ist; und
Senden (S805) des Ziel-Multicast-Broadcast-Dienstes an das Schmalband-Endgerät und das Breitband-Endgerät auf der Frequenzbereichsressource, die dem MTCH entspricht.

5. Verfahren nach Anspruch 4, wobei die Anzeigeinformationen mindestens einen Anzeiger umfassen, eine Entsprechung zwischen dem mindestens einen Anzeiger und einer Kennung mindestens eines Multicast-Broadcast-Dienstes besteht und der mindestens eine Multicast-Broadcast-Dienst den Ziel-Multicast-Broadcast-Dienst umfasst.

6. Verfahren nach Anspruch 4 oder 5, wobei eine Kandidaten-Frequenzbereichsposition eines ersten physikalischen Downlink-Steuerkanals PDCCH und eine Kandidaten-Frequenzbereichsposition eines zweiten PDCCH teilweise oder vollständig überlappen; und
der erste PDCCH verwendet wird, um erste Downlink-Steuerinformationen DCI zu übertragen, wobei die ersten DCI verwendet werden, um die Frequenzbereichsressource, die dem MTCH entspricht, für das Schmalband-Endgerät zu planen; und der zweite PDCCH verwendet wird, um zweite DCI zu übertragen, wobei die zweiten DCI verwendet werden, um die Frequenzbereichsressource, die dem MTCH für das Breitband-Endgerät entspricht, zu planen.

7. Verfahren nach Anspruch 6, wobei sich eine Kandidaten-Zeitbereichsposition des ersten PDCCH und eine Kandidaten-Zeitbereichsposition des zweiten PDCCH teilweise oder vollständig überlappen.

8. Verfahren nach Anspruch 7, wobei die ersten DCI die gleichen wie die zweiten DCI sind und das Verfahren ferner umfasst:
Senden der ersten DCI an das Schmalband-Endgerät und das Breitband-Endgerät auf einer ersten Zeit-Frequenz-Ressource, wobei eine Frequenzbereichsposition der ersten Zeit-Frequenz-Ressource in einem überlappenden Teil zwischen der Kandidaten-Frequenzbereichsposition des ersten PDCCH und der Kandidaten-Frequenzbereichsposition des zweiten PDCCH liegt und eine Zeitbereichsposition der ersten Zeit-Frequenz-Ressource in einem überlappenden Teil zwischen der Kandidaten-Zeitbereichsposition des ersten PDCCH und der Kandidaten-Zeitbereichsposition des zweiten PDCCH liegt.

9. Multicast-Broadcast-Dienst-Empfangsverfahren, wobei das Verfahren auf ein Schmalband-Endgerät angewendet wird und das Verfahren umfasst:
Empfangen (S803) eines ersten Multicast-Steuerkanals MCCH von einer Zugangsnetzwerkvorrichtung, wobei der erste MCCH verwendet wird, um erste Konfigurationsinformationen eines Multicast-Verkehrskanals MTCH eines Ziel-Multicast-Broadcast-Dienstes zu übertragen; und eine Frequenzbereichsressource, die dem MTCH entspricht und die durch Verwenden von ersten Konfigurationsinformationen konfiguriert ist, die gleiche wie eine Frequenzbereichsressource ist, die dem MTCH entspricht und die durch Verwenden von zweiten Konfigurationsinformationen konfiguriert ist, und die zweiten Konfigurationsinformationen Konfigurationsinformationen sind, die zu dem MTCH gehören und die für ein Breitband-Endgerät bestimmt sind; und
Empfangen (S805) des Ziel-Multicast-Broadcast-Dienstes von der Zugangsnetzwerkvorrichtung auf der Frequenzbereichsressource, die dem MTCH entspricht.

10. Multicast-Broadcast-Dienst-Empfangsverfahren, wobei das Verfahren auf ein Breitband-Endgerät angewendet wird und das Verfahren umfasst:
Empfangen (S804) eines zweiten Multicast-Steuerkanals MCCH von einer Zugangsnetzwerkvorrichtung, wobei der zweite MCCH verwendet wird, um zweite Konfigurationsinformationen eines Multicast-Verkehrskanals MTCH eines Ziel-Multicast-Broadcast-Dienstes zu übertragen; und eine Frequenzbereichsressource, die dem MTCH entspricht und die durch Verwenden von zweiten Konfigurationsinformationen konfiguriert ist, die gleiche wie eine Frequenzbereichsressource ist, die dem MTCH entspricht und die durch Verwenden von ersten Konfigurationsinformationen konfiguriert ist, und die ersten Konfigurationsinformationen Konfigurationsinformationen sind, die zu dem MTCH gehören und die für ein Schmalband-Endgerät bestimmt sind; und
Empfangen (S805) des Ziel-Multicast-Broadcast-Dienstes von der Zugangsnetzwerkvorrichtung auf der Frequenzbereichsressource, die dem MTCH entspricht.

11. Verfahren nach Anspruch 9 oder 10, wobei die ersten Konfigurationsinformationen eine erste temporäre Gruppenfunknetzwerkkennung G-RNTI umfassen, die zweiten Konfigurationsinformationen eine zweite G-RNTI umfassen, die erste G-RNTI gleich der zweiten G-RNTI ist und die erste G-RNTI und die zweite G-RNTI verwendet werden, um den Ziel-Multicast-Broadcast-Dienst zu verwürfeln.

12. Kommunikationseinrichtung, die konfiguriert ist, um die Verfahrensschritte nach einem der Ansprüche 1 bis 3 zu implementieren.

13. Kommunikationseinrichtung, die konfiguriert ist, um die Verfahrensschritte nach einem der Ansprüche 4 bis 8 zu implementieren.

14. Kommunikationseinrichtung, die konfiguriert ist, um die Verfahrensschritte nach einem der Ansprüche 9 bis 11 zu implementieren.

15. Computerprogrammprodukt, das Computeranweisungen umfasst, wobei, wenn ein Teil oder alle der Computeranweisungen auf einem Computer ausgeführt werden, bewirkt wird, dass eine Zugangsnetzwerkvorrichtung das Verfahren nach einem der Ansprüche 1 bis 3 vornimmt, oder bewirkt wird, dass eine Zugangsnetzwerkvorrichtung das Verfahren nach einem der Ansprüche 4 bis 8 vornimmt, oder bewirkt wird, dass ein Schmalband-Endgerät das Verfahren nach Anspruch 9 oder 11, wenn abhängig von Anspruch 9, vornimmt, oder bewirkt wird, dass ein Breitband-Endgerät das Verfahren nach Anspruch 10 oder 11, wenn abhängig von Anspruch 10, vornimmt.

## Revendications

1. Procédé d'envoi de service de diffusion multidiffusion, dans lequel le procédé comprend :
la réception (S502) d'informations d'indication à partir d'un dispositif réseau central, dans lequel les informations d'indication indiquent qu'un récepteur d'un service cible de diffusion multidiffusion comprend un terminal à bande étroite et un terminal à large bande ;
l'envoi (S503) d'un canal de commande de multidiffusion MCCH au terminal à bande étroite et au terminal à large bande, dans lequel le MCCH est utilisé pour transporter des informations de configuration d'un canal de trafic multidiffusion MTCH du service cible de diffusion multidiffusion, et une première ressource de domaine fréquentiel correspondant au MCCH ou une largeur de bande de planification occupée par le MCCH ne dépasse pas une capacité de largeur de bande maximale du terminal à bande étroite ; et
l'envoi (S504) du service cible de diffusion multidiffusion au terminal à bande étroite et au terminal à large bande sur une ressource de domaine fréquentiel correspondant au MTCH.

2. Procédé selon la revendication 1, dans lequel les informations d'indication comprennent au moins un indicateur, une correspondance existe entre l'au moins un indicateur et un identifiant d'au moins un service de diffusion multidiffusion, et l'au moins un service de diffusion multidiffusion comprend le service cible de diffusion multidiffusion.

3. Procédé selon l'une quelconque des revendications 1 à 2, dans lequel la première ressource de domaine fréquentiel correspondant au MCCH est une largeur de bande maximale pouvant être occupée par le MCCH.

4. Procédé d'envoi de service de diffusion multidiffusion, dans lequel le procédé comprend :
la réception (S802) d'informations d'indication à partir d'un dispositif réseau central, dans lequel les informations d'indication indiquent qu'un récepteur d'un service cible de diffusion multidiffusion comprend un terminal à bande étroite et un terminal à large bande ;
l'envoi (S803) d'un premier canal de commande de multidiffusion MCCH au terminal à bande étroite, et l'envoi (S804) d'un second MCCH au terminal à large bande, dans lequel le premier MCCH est utilisé pour transporter de premières informations de configuration d'un canal de trafic multidiffusion MTCH du service cible de diffusion multidiffusion, et le second MCCH est utilisé pour transporter de secondes informations de configuration du MTCH ; et une ressource de domaine fréquentiel qui correspond au MTCH et qui est configurée en utilisant les premières informations de configuration est la même qu'une ressource de domaine fréquentiel qui correspond au MTCH et qui est configurée en utilisant les secondes informations de configuration ; et
l'envoi (S805) du service cible de diffusion multidiffusion au terminal à bande étroite et au terminal à large bande sur la ressource de domaine fréquentiel correspondant au MTCH.

5. Procédé selon la revendication 4, dans lequel les informations d'indication comprennent au moins un indicateur, une correspondance existe entre l'au moins un indicateur et un identifiant d'au moins un service de diffusion multidiffusion, et l'au moins un service de diffusion multidiffusion comprend le service cible de diffusion multidiffusion.

6. Procédé selon la revendication 4 ou 5, dans lequel une position candidate de domaine fréquentiel d'un premier canal physique de commande de liaison descendante PDCCH et une position candidate de domaine fréquentiel d'un second PDCCH se chevauchent partiellement ou complètement ; et
le premier PDCCH est utilisé pour transporter de premières informations de commande de liaison descendante DCI, dans lequel les premières DCI sont utilisées pour planifier la ressource de domaine fréquentiel correspondant au MTCH pour le terminal à bande étroite ; et le second PDCCH est utilisé pour transporter des secondes DCI, dans lequel les secondes DCI sont utilisées pour planifier la ressource de domaine fréquentiel correspondant au MTCH pour le terminal à large bande.

7. Procédé selon la revendication 6, dans lequel une position candidate de domaine temporel du premier PDCCH et une position candidate de domaine temporel du second PDCCH se chevauchent partiellement ou complètement.

8. Procédé selon la revendication 7, dans lequel les premières DCI sont les mêmes que les secondes DCI, et le procédé comprend en outre :
l'envoi des premières DCI au terminal à bande étroite et au terminal à large bande sur une première ressource temps-fréquence, dans lequel une position de domaine fréquentiel de la première ressource temps-fréquence est située dans une partie en chevauchement entre la position candidate de domaine fréquentiel du premier PDCCH et la position candidate de domaine fréquentiel du second PDCCH, et une position de domaine temporel de la première ressource temps-fréquence est située dans une partie en chevauchement entre la position candidate de domaine temporel du premier PDCCH et la position candidate de domaine temporel du second PDCCH.

9. Procédé de réception de service de diffusion multidiffusion, dans lequel le procédé est appliqué à un terminal à bande étroite, et le procédé comprend :
la réception (S803) d'un premier canal de commande de multidiffusion MCCH à partir d'un dispositif réseau d'accès, dans lequel le premier MCCH est utilisé pour transporter de premières informations de configuration d'un canal de trafic multidiffusion MTCH d'un service cible de diffusion multidiffusion ; et une ressource de domaine fréquentiel qui correspond au MTCH et qui est configurée en utilisant les premières informations de configuration est la même qu'une ressource de domaine fréquentiel qui correspond au MTCH et qui est configurée en utilisant de secondes informations de configuration, et les secondes informations de configuration sont des informations de configuration du MTCH et qui sont destinées à un terminal à large bande ; et
la réception (S805) du service cible de diffusion multidiffusion à partir du dispositif réseau d'accès sur la ressource de domaine fréquentiel correspondant au MTCH.

10. Procédé de réception de service de diffusion multidiffusion, dans lequel le procédé est appliqué à un terminal à large bande, et le procédé comprend :
la réception (S804) d'un second canal de commande de multidiffusion MCCH à partir d'un dispositif réseau d'accès, dans lequel le second MCCH est utilisé pour transporter de secondes informations de configuration d'un canal de trafic multidiffusion MTCH d'un service cible de diffusion multidiffusion ; et une ressource de domaine fréquentiel qui correspond au MTCH et qui est configurée en utilisant les secondes informations de configuration est la même qu'une ressource de domaine fréquentiel qui correspond au MTCH et qui est configurée en utilisant de premières informations de configuration, et les premières informations de configuration sont des informations de configuration du MTCH et qui sont destinées à un terminal à bande étroite ; et
la réception (S805) du service cible de diffusion multidiffusion à partir du dispositif réseau d'accès sur la ressource de domaine fréquentiel correspondant au MTCH.

11. Procédé selon la revendication 9 ou 10, dans lequel les premières informations de configuration comprennent un premier identifiant temporaire de réseau radio de groupe G-RNTI, les secondes informations de configuration comprennent un second G-RNTI, le premier G-RNTI est le même que le second G-RNTI, et le premier G-RNTI et le second G-RNTI sont utilisés pour embrouiller le service cible de diffusion multidiffusion.

12. Appareil de communication, configuré pour mettre en œuvre les étapes de procédé selon l'une quelconque des revendications 1 à 3.

13. Appareil de communication, configuré pour mettre en œuvre les étapes de procédé selon l'une quelconque des revendications 4 à 8.

14. Appareil de communication, configuré pour mettre en œuvre les étapes de procédé selon l'une quelconque des revendications 9 à 11.

15. Produit-programme d'ordinateur comprenant des instructions informatiques, dans lequel, lorsqu'une partie ou la totalité des instructions informatiques sont exécutées sur un ordinateur, un dispositif réseau d'accès est amené à mettre à exécution le procédé selon l'une quelconque des revendications 1 à 3, ou un dispositif réseau d'accès est amené à mettre à exécution le procédé selon l'une quelconque des revendications 4 à 8, ou un terminal à bande étroite est amené à mettre à exécution le procédé selon la revendication 9 ou la revendication 11 lorsqu'elle dépend de la revendication 9, ou un terminal à large bande est amené à mettre à exécution le procédé selon la revendication 10 ou la revendication 11 lorsqu'elle dépend de la revendication 10.
